# EUROPÄISCHE PATENTSCHRIFT

(11) **EP 2 102 408 B1**
(45) Veröffentlichungstag und Bekanntmachung des Hinweises auf die Patenterteilung: **07.08.2013**
(21) Anmeldenummer: 07857360.7
(22) Anmeldetag: 11.12.2007
(51) Int. Cl.: D06M 13/46, D06M 13/513, A01N 55/00, A01N 55/02, C08K 5/544, D06M 16/00, D06M 11/17, D06M 11/20, D06M 11/45, D06M 11/46, D06M 11/56, D06M 11/71, A01N 33/12, A01N 25/24, A01N 25/34

(54) **VERFAHREN ZUR ANTIMIKROBIELLEN AUSRÜSTUNG VON TEXTILIEN UND FASERN**
METHOD FOR ANTIMICROBIALLY FINISHING TEXTILES AND FIBERS
PROCÉDÉ DE TRAITEMENT ANTIMICROBIEN DE TEXTILES ET DE FIBRES

(30) Priorität: 12.12.2006 DE 102006058790
(43) Veröffentlichungstag der Anmeldung: 23.09.2009
(73) Patentinhaber: Sanitized AG, 3400 Burgdorf (CH)
(72) Erfinder: BENDER, Walter, 4310 Rheinfelden (CH)
(74) Vertreter: Jacobi, Markus Alexander
(86) Internationale Anmeldenummer: PCT/EP2007/063663
(87) Internationale Veröffentlichungsnummer: WO 2008/071680

(56) Entgegenhaltungen:
- WO-A-2004/087226
- WO-A-2005/069785
- WO-A-2007/135163
- DE-C1- 19 928 127

## Beschreibung

Die vorliegende Erfindung betrifft ein Verfahren für das dauerhafte antimikrobielle Ausrüsten von Textilien und Fasern. Dabei werden zum einen eine organische Primer-Komponente (P) und zum anderen eine organische antimikrobielle Komponente (K) auf die Textilien und Fasern aufgebracht. Die dazu eingesetzte Zusammensetzung bzw. die verwendeten Zusammensetzungen können neben einem oder mehreren Lösungsmitteln gegebenenfalls auch eine Metallsalz-Komponente (M) sowie weitere Hilfskomponenten enthalten.

Im Stand der Technik werden bereits verschiedene Verfahren zur Ausrüstung von Textilien und Fasern mit antimikrobiellen Komponenten beschrieben, die z. B. den Tragekomfort von Kleidungsstücken erhöhen. Die meisten Textilien enthalten mikrobiologisch abbaubares Material. Sie sind häufig entweder vollständig oder teilweise aus mikrobiologisch abbaubaren Fasern hergestellt, beispielsweise aus Baumwolle, Cellulose (z. B. Viskose und Tencel), Hanf, Flachs, Leinen, Seide, Acetat oder Wolle. Auch Textilien aus synthetischen Komponenten wie z.B. Polyester, Polyacrylnitril, Polyamid (z. B. Aramid, Nomex, Kevlar, Polyamid 6, Polyamid 6.6) oder Polypropylen, werden regelmäßig von Bakterien besiedelt, insbesondere dann, wenn sie mit Ausrüstungsmitteln, wie z.B. Weichmachern, Hydrophobierungsmitteln, Antistatika; Fluorcarbonen und/oder Bindern versehen werden oder während des Gebrauchs mikrobiologisch abbaubares Material aufnehmen, wie z.B. organische Substanzen aus der Umwelt.

Durch den Befall der Textilien mit Mikroorganismen wie Bakterien können nicht nur die Optik sondern auch die Gebrauchseigenschaften der Textilien negativ verändert werden.

Die organischen Bestandteile von apokrinem Schweiß, einer beim Austritt aus den Drüsen praktisch geruchlosen Flüssigkeit, werden in kurzer Zeit von Bakterien der Hautflora zersetzt. Dies geschieht auch auf textilen Materialen, die mit Schweiß in Kontakt kommen. Die aus dem Abbau von z. B. langkettigen Fettsäuren oder Hormonen, wie beispielsweise Testosteron, entstehenden kleinen Moleküle wie Buttersäure oder Ameisensäure führen zu einem unerwünschten Schweißgeruch.

Dabei sind Textilien aus Synthesefasern wie z. B. Polyester oder Polyamid für einen bakteriellen Abbau von Schweiß besonders anfällig und können deshalb nach besonders kurzer Zeit den typischen, unangenehmen Geruch von zersetztem Schweiß aufweisen.

Die Besiedlung durch Mikroorganismen und der Abbau von Schweiß lassen sich bekanntermaßen durch eine antimikrobielle Ausrüstung von Textilien verhindern. Für die antibakterielle Ausrüstung von Textilien werden im Stand der Technik z. B. Substanzen wie Triclosan (ein Phenoxy-Phenol-Derivat) oder in jüngerer Zeit auch Zubereitungen auf der Basis von Silberionen eingesetzt. Technisch gesehen, haben Produkte mit diesen Substanzen jedoch ihre engen Grenzen. Nachteilig sind beispielsweise der Dampfdruck von Triclosan auf dem Spannrahmen und die erreichbare Waschbeständigkeit bei den bislang verfügbaren Silberprodukten, insbesondere wenn kein polymerer Binder appliziert wird. Die Vermeidung von Bindemitteln ist jedoch oftmals notwendig, da polymere Bindemittel den Griff von Textilien verändern, was als Effekt nicht immer erwünscht ist. Aus US 3,788,803 ist eine Behandlung von Synthesefasern mit Halogen-Phenolen in Kombination mit Phthalsäureestern bekannt.

Es gibt bislang kein zufrieden stellendes Verfahren für die antibakterielle Ausrüstung von Textilien und Fasern, die synthetische Komponenten enthalten bzw. aus diesen bestehen.

Die Aufgabe einer dauerhaften antimikrobiellen bzw. antibakteriellen Ausrüstung, insbesondere auf Textilien die ganz oder teilweise aus Synthesefasern wie Polyamid oder Polyester bestehen, ist bislang unzureichend gelöst. Gerade bei empfindlichen Textilien ist auf der anderen Seite das Bedürfnis nach einer antimikrobiellen Ausrüstung sehr groß, da solche Textilien oft für Anwendungen im Sport- und Freizeitbereich eingesetzt werden, wo die textilen Eigenschaften dieser Fasern ganz besonders erwünscht sind, auf der anderen Seiten aber gerade bei sportlichen Betätigungen die Belastung der Textilien durch Schweiß sehr gross ist.

Nahrung, Wärme und Feuchtigkeit, die Wachstumsgrundlagen von Bakterien sind, treten zudem gerade bei Sporttextilien auf.

Neben Bekleidungstextilien gibt es zunehmend Anwendungen von Synthesefasern wie Polyamid und insbesondere Polyester im Bereich der Heimtextilien, wo solche Fasern oft als Mikrofasern eingesetzt werden. Beispiele für solche Anwendungen von Synthesefasern sind Mikrofasertücher für die Reinigung, Frottee, oder auch Polsterbezugsstoffe.

Neben den bereits oben genannten antibakteriell wirkenden Substanzen ist der Einsatz von quaternären Ammonium-Verbindungen (so genannten "Quats") für die antibakterielle Ausrüstung von Textilien in der Literatur beschrieben. Substanzen dieser Klasse decken oftmals ein breites Keimspektrum mit hervorragender Wirkung ab. So wird in Karl Heinz Wallhäusser, Praxis der Sterilisation Desinfektion - Konservierung, 5. Auflage, Georg Thieme Verlag Stuttgart, New York 1995, Seite 586 ff. diese Substanzklasse im Detail beschrieben. Seit langem ist bekannt, dass quaternäre Ammoniumverbindungen dann bakterizid wirken, wenn mindestens einer der vier Substituenten am quaternären Stickstoff eine Kettenlänge von 8 bis 18 C-Atomen aufweisst, vorzugsweise eine solche von 12 bis 16 C-Atomen.

Die anderen Substituenten können z. B. gerade oder verzweigte Alkylreste sein oder Reste mit Heteroatomen oder Reste mit Aromaten. Häufig werden auch ein oder mehrere Benzylreste an den quaternären Stickstoff im Molekül gebunden. Gute Ergebnisse konnten auch mit quaternären Ammoniumverbindungen mit zwei Methylgruppen, einer n-Alkylgruppe mit zwischen 10 bis 18 C-Atomen und einer 3-Trimethoxysilylpropylgruppe gefunden werden.

Quaternäre Ammoniumverbindungen haben die positive Eigenschaft, dass sie in Wasser gut löslich sind. Diese Eigenschaft kommt der wässrigen Applikation im industriellen Ausrüstungsprozess in der Textilindustrie sehr entgegen. Gleichzeitig führt diese Eigenschaft aber dazu, dass solche Verbindungen schnell von den Textilien herunter gewaschen werden, da die Haftung an Textilien primär mittels Van-der-Waals-Kräften und ggf. noch mit Ionenpaarbindungen möglich ist.

Um die Waschbeständigkeit auf Textilien zu verbessern, wurden die Vorstufen der Quats, nämlich tertiäre Amine mit 3-Chlorpropyltrimethoxysilan quaternisiert. Wird diese Quarternisierung im Lösungsmittel Methanol durchgeführt, so ist diese Umsetzung schon seit Jahrzehnten bekannt.

Auf dem Markt gibt es z. B. Produkte mit einer Trimethoxysilylpropylgruppe am quarternären Stickstoff, wobei die Produkte aus der Umsetzung mit Didecylmethylamin beziehungsweise mit Tetradecyldimethylamin beziehungsweise aus der Umsetzung mit Octadecyldimethylamin erhalten werden können. Die lösungsmittelfreie Quarternisierung von Aminen wird z. B. in DE-A 199 28 127 beschrieben.

WO 2004/087226 beschreibt ein antimikrobielles Substrat, an dessen Oberfläche eine Organosilicon-Quatverbindung, beispielsweise 3-(Trimethoxysilyl)propyl-dimethyl-octadecyl-ammoniumchlorid, und ein kationisches Polymer, beispielsweise Polyethylenimine, adsorbiert sind.

WO 2005/069785 beschreibt ein Verfahren zur Bildung von dünnen, selbst-reinigenden Polysiloxan-Beschichtungen auf verschiedenen Oberflächen, wie beispielsweise Oberflächen im medizinischen Bereich.

WO 2007/135163 beschreibt die Verwendung von Poly-(hexamethylenbiguanid) Hydrochlorid zur antiviral Ausrüstung von polymeren oder textilen Artikeln.

Die Quarternisierung kann auch mit dem Octadecyldimethylamin in Methanol erfolgen, führt dann aber zu einem bezüglich der antibakteriellen Wirkung nicht optimalen Produkt. Der Hauptnachteil dieses Produktes ist das Lösungsmittel Methanol, das wegen seiner Eigenschaften in der Textilindustrie zu deutlichen Einschränkungen in der Anwendung führt.

Textilien aus Polyester wurden bislang bereits mit einer Formulierung mit dem Wirkstoff Dimethyl-tetradecyl-[3-(trimethoxysilyl)]-propyl-ammoniumchlorid, die als Sanitized T 99-19 (Hersteller: Sanitized AG, Schweiz) auf dem Markt ist, ausgerüstet. Dabei liegt eine 50%ige Lösung des technischen Wirkstoffes (Salzes) in Methyltriglycol vor. Methyltriglycol hat die chemische Formel CH₃(OCH₂CH₂)₃-OH.

Das ebenfalls bekannte Produkt Aegis AEM 5772/5 (Hersteller: Aegis) ist eine rund 5%ige wässrige Lösung des Wirkstoffs Dimethyl-octadecyl-[3-(trimethoxysilyl)-propyl]-ammoniumchlorid. Alternativ ist auch der höher konzentrierte Wirkstoff gelöst in Methylalkohol erhältlich.

Bei der Herstellung der Applikationsbäder entstehen sehr schnell die Hydrolyscprodukte der Wirkstoffe, die zur Oligomerisierung neigen, sofern sie nicht bereits in der Handelsform als überwiegend hydrolysiertes Produkt vorliegen.

Die Ausrüstungen der Textilien erfolgen bislang vorzugsweise im Foulardverfahren. Werden diese Textilien mittels eines Count-Tests nach dem Verfahren JIS L 1902:2002 oder nach der Norm ASTM E 21-49 geprüft, so zeigen sie eine hervorragende antibakterielle Wirkung.

Diese bekannten Produkte finden beispielsweise auf Textilien aus Cellulosefasern Reaktionspartner, mit denen sie chemisch reagieren und eine stabile kovalente Bindung eingehen können. Auf solchen Textilien ist die antimikrobielle Ausrüstung dauerhaft.

Auf Polyester oder Polyamid hingegen gibt es wenige Reaktionspartner, um solche Produkte dauerhaft zu binden. Werden diese Textilien gewaschen, so verschwindet die antibakterielle Wirkung meist schon nach wenigen Waschzyklen weitgehend bis vollständig.

Es stellt sich daher die Aufgabe, eine technische Lösung zu finden, wie organische quarternäre Ammoniumverbindungen, insbesondere solche mit einer Trimethoxysilylalkylgruppe als Rest an der quarternären Ammoniumgruppe, (oder die Hydrolyseformen davon) auf Textilien, die weitgehend oder vollständig aus Synthesefasern, wie z. B. Polyamid oder Polyester hergestellt worden sind, möglichst waschfest appliziert werden können. Es besteht ein Bedarf an Verfahren, die eine dauerhafte antimikrobielle Ausrüstung ermöglichen und einfach und kostengünstig angewendet werden können. Insbesondere Polyamid und Polyester sind als Zielsubstrat für waschfeste Ausrüstungen von Interesse. Als waschfest gilt dabei eine nachweisbare antibakterielle Wirkung nach mindestens 20 Waschzyklen gemäß der Norm EN ISO 6330 (6A) bei 40°C.

Der Nachweis erfolgt z. B. in einer Prüfung nach den Normen JIS L 1902:2002 oder ASTM E 21-49 gegen Staphylococcus aureus (ATCC 6538). Die Keimzahlreduktion zwischen ausgerüstetem und nicht ausgerüstetem Muster beziehungsweise zwischen ausgerüstetem Muster nach der Inkubation und der Keimzahl des Inokulums sollten ungefähr bei zwei Zehnerpotenzen liegen, um von einer guten antibakteriellen Wirkung sprechen zu können.

Die oben genannten Aufgaben werden gelöst durch ein Verfahren zur antimikrobiellen Ausrüstung von Textilien und/oder Fasern, die mindestens eine synthetische Komponente (z. B Polyamid oder Polyester) enthalten (oder aus dieser bestehen), bei dem auf die Textilien oder Fasern eine vorzugsweise wässrige Lösung einer organischen Primer-Komponente (P), welche die Hydrophobie der Oberfläche der Textilien oder Fasern vergrößert, und als antimikrobielle Komponente (K) mindestens eine organische quaternäre Ammoniumverbindung aufgebracht werden, wobei die Primer-Komponente (P) aus einer oder mehreren der folgenden Verbindungen besteht: aromatische Mono- oder Dicarbonsäuren, wobei diese auch durch Hydroxy-Gruppen substituiert sein können, aromatische Mono- und Diamine; aromatische Mono- oder Dialkohole; aliphatische Mono- oder Dicarbonsäure mit 6 bis 26 C-Atomen, wobei diese auch durch Hydroxy- oder Amino-Gruppen substituiert sein können, aliphatische, primäre, sekundäre und tertiäre Amine mit 6 bis 26 C-Atomen; aliphatische, primäre oder sekundäre Alkohole mit 6 bis 26 C-Atomen: aliphatische, primäre Mercaptane mit 6 bis 26 C-Atomen: Aminosäuren. Ferner können gegebenenfalls auch eine Metallsalz-Komponente (M) sowie gegebenenfalls ein Lösungsmittel (L) sowie gegebenenfalls weitere Hilfskomponenten gleichzeitig oder zeitlich versetzt auf die Textilien oder Fasern aufgebracht werden.

Das erfindungsgemäße Verfahren kann in zahlreichen Varianten durchgeführt werden, wobei sich ein "zwei-Bad-Verfahren" bewährt hat. Es ist jedoch auch möglich ein so genanntes "ein-Bad-Verfahren" durchzuführen oder mehrstufige Bäder zu realisieren. In einer besonderen Ausführungsform der Erfindung wird ein Verfahren durchgeführt, bei dem eine wässrigen Lösung einer organischen Primer-Komponente (P) verwendet wird, die zusätzlich als antimikrobielle Komponente (K) mindestens eine organische quaternäre Ammoniumverbindung enthält, sowie gegebenenfalls eine Metallsalz-Komponente (M). Bei dieser Variante sind z. B. in einer wässrigen Zusammensetzung bereits die organische Primer-Komponente (P) und die quaternäre Ammoniumverbindung kombiniert, so dass eine vereinfachte Ausrüstung nach dem "ein-Bad-Verfahren" möglich wird.

In einer weiteren Ausführungsform der Erfindung wird ein Verfahren durchgeführt, bei dem mehrere Verfahrensschritte nach einander ausgeführt werden. So kann zunächst ein Verfahrensschritt a) der Vorbehandlung der Textilien oder Fasern mit einer wässrigen Lösung einer organischen Primer-Komponente (P) erfolgen. Anschließend wird gegebenenfalls ein thermischer Trocknungsschritt b) vorgenommen, und nachfolgend wird in einem weiteren Verfahrensschritt c) eine Behandlung der Textilien oder Fasern mit einer beispielsweise wässrigen Lösung enthaltend als antimikrobielle Komponente (K) mindestens eine organische quaternäre Ammoniumverbindung, sowie gegebenenfalls eine Metallsalz-Komponente (M) sowie gegebenenfalls ein oder mehrere Lösungsmittel (L) und gegebenenfalls weitere Hilfskomponenten vorgenommen.

Bei dem erfindungsgemäßen Verfahren wird bevorzugt eine wässrige Lösung einer organischen Primer-Komponente (P) verwendet. Als Primer-Komponente werden insbesondere organischen Molekülen eingesetzt, die in der Lage sind, die Hydrophobie der Oberfläche der Textilien oder Fasern zu vergrößern.

Dieses setzt voraus, das das Molekül über einen in der Regel hydrophoben Molekülteil mit der Synthesefaser in Wechselwirkung treten kann und zum anderen über einen hydrophilen Molekülteil mit der antimikrobiellen Komponente reagieren kann.

Bei der Behandlung des Textils mit der Primer-Komponente wird häufig eine Erwärmung der das Textil und die Primer-Komponente enthaltenden wässrigen Lösung (z. B. auf eine Temperatur von 40 bis 90° C) vorgenommen. Die Behandlung kann auch in einem Hochtemperatur-Auszugsverfahren (z. B. bei Temperaturen von 100 bis 140° C, insbesondere bei etwa 120° C) erfolgen.

Erfindungsgemäß besteht die Primer-Komponente (P) aus einer oder mehreren der der folgenden Verbindungen:
Aromatische Mono- und Dicarbonsäuren, wobei diese auch durch Hydroxy-Gruppen substituiert sein können;
Aromatische Mono- und Diamine, aromatischen Mono- oder Dialkohole;
Aliphatische Mono- und Dicarbonsäure mit 6 bis 26 C-Atomen, wobei diese auch durch Hydroxy- oder Amino-Gruppen substituiert sein können;
Aliphatische, primäre, sekundäre und tertiäre Amine mit 6 bis 26 C-Atomen;
Aliphatische, primäre und sekundäre Alkohole mit 6 bis 26 C-Atomen;
Aliphatische, primäre Mercaptane mit 6 bis 26 C-Atomen;
Natürliche und nicht-natürlich vorkommende Aminosäuren, beispielsweise die Aminosäure Phenylalanin.

In einer weiteren Ausführungsform der Erfindung wird ein Verfahren durchgeführt, bei dem die mit einer wässrigen Lösung behandelten Textilien oder Fasern mindestens einem Trocknungsschritt unterzogen werden, wobei eine Temperatur von mindestens 100° C, vorzugsweise von 100 bis 180° C angewendet wird. Der Trocknungsschritt kann z. B. nach der Behandlung der Textilien oder Fasern mit der Lösung enthaltend die Primer-Komponente (P) erfolgen. Die dabei angewandte Temperatur ist von dem Material der Textilien und Fasern abhängig, da die unterschiedlichen Materialien verschiedene Glasübergangstemperaturen aufweisen. Die Glasübergangstemperatur von einem reinen Polyester-Material kann z. B. bei 98° C liegen, die eines gemischten Polymermaterials z. B. bei 74°C. In der Literatur werden allgemein Glasübergangstemperaturen von etwa 70° C bis knapp über 100° C beschrieben.

Wird eine Temperatur von mindestens 100° C, vorzugsweise von 100 bis 180° C, insbesondere 110 bis 160° C bei dem Trocknungsschritt angewendet, liegt diese Temperatur in der Regel über der Glasübergangstemperatur des behandelten Materials. Durch diesen Schritt kann die Primer-Komponente zumindest teilweise in dem Material der Textilien oder Fasern gelöst werden.

Die thermische Behandlung dauert je nach angewendetem Verfahren in der Regel von 1 Sekunde bis zu 10 Minuten, vorzugsweise von 2 Sekunden bis 4 Minuten, insbesondere von 3 Sekunden bis 2 Minuten.

In einer weiteren Ausführungsform der Erfindung wird ein Verfahren durchgeführt, bei dem eine antimikrobielle Komponente (K) und gegebenenfalls eine Metallsalz-Komponente (M) sowie gegebenenfalls ein Lösungsmittel (L) und gegebenenfalls weitere Hilfskomponenten verwendet werden, wobei die Komponente (K) eine Verbindung der allgemeinen Formel (I) darstellt 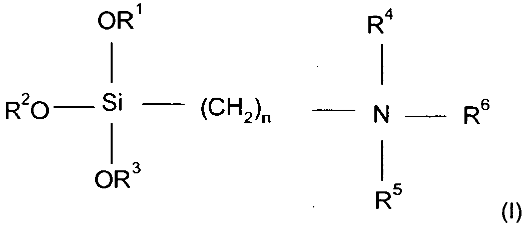 wobei die Reste unabhängig voneinander folgende Bedeutungen haben,
R¹ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R² bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R³ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R⁴ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁵ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁶ bedeutet einen verzweigten oder nicht verzweigte Alkylrest mit 8 bis 18 C-Atomen;
n bedeutet eine ganze Zahl von 1 bis 6.

Die Metallsalz-Komponente (M), soweit sie ebenfalls verwendet wird, enthält dabei bevorzugt mindestens ein Salz eines zwei- bis fünfwertigen Metalls.

Unter einem Alkylrest werden z. B. ein Methyl-, Ethyl-, Propyl-, Butyl-, Hexyl-, Heptyl- oder Octylrest verstanden, aber auch z.B. die langkettigen Reste wie Octyl-, Decyl-, Dodecyl, Tetradecyl, Hexadecyl- oder der Octadecylrest. Dabei können diese Reste auch verzweigt, oder unverzweigt, chiral oder achiral sein.

Unter dem Begriff Cycloalkyl werden mono- oder bicyclische gesättigte Gruppen mit 3 bis 8 C-Atomen verstanden, z. B. Cyclohexyl, Cyclopentyl oder Cyclopropyl, wobei Cyclohexyl bevorzugt wird.

Unter dem Begriff "gegebenenfalls durch ein oder zwei Halogenatome substituierter Benzylrest" werden verschiedene mono- oder disubstituierte Benzylreste verstanden, die z. B. durch Fluor, Chlor oder Brom substituiert sind.

Unter dem Begriff Heteroaryl werden mono- oder bicyclische ungesättigte Reste verstanden, die ein oder mehrere "Heteroatome" (z.B. N, O, oder S enthalten). Diese Reste können z. B. 6-gliedrige und/oder 5-gliedrige Ringe enthalten. Als Beispiele für stickstoffhaltige Reste seien genannt: Pyridin, Pyrimidin, Pyrazin, Pyridazin, Pyrrol, Imidazol, Triazol; für schwefelhaltige Reste: Thiophen oder Thiazol; und für sauerstoffhaltige Reste: Furan oder Oxazol.

Aufgrund der quartären Struktur am Stickstoffatom liegt eine positive Ladung im Molekül vor, die z. B. durch Gegenionen kompensiert werden kann. Typische Anionen in den Salzen sind z. B. Chorid, Bromid, Fluoride, Sulfat, Phosphate, Formiate, Acetate oder Propionate. Bevorzugt werden Chloride eingesetzt.

Bevorzugt wird ein Verfahren angewendet, bei dem eine antimikrobielle Komponente (K) der allgemeinen Formel (I) eingesetzt wird, wobei die Reste unabhängig voneinander folgende Bedeutungen haben:
R¹ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R² bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R³ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest, einen Pyridinrest, einen Pyrimidinrest, einen Pyrazinrest, einen Pyridazinrest, einen Pyrrolrest oder einen Imidazolrest bedeutet;
R⁵ einen Alkylrest mit 1 bis 18 C-Atomen, einen Cyclo-alkylrest mit 3 bis 7 C-Atomen, einen Phenylrest, einen Benzylrest, einen Pyridinrest, einen Pyrimidinrest, einen Pyrazinrest, einen Pyridazinrest, einen Pyrrolrest oder einen Imidazolrest bedeutet;
R⁶ einen Alkylrest mit 8 bis 18 C-Atomen;
und n eine ganze Zahl von 1 bis 4 bedeutet.

Bevorzugt wird ferner ein Verfahren angewendet, bei dem eine antimikrobielle Komponente (K) der allgemeinen Formel (I) verwendet wird, wobei die Reste unabhängig voneinander folgende Bedeutungen haben:
R¹, R², R³ bedeuten jeweils einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Phenylrest oder einen Benzylrest,
R⁵ einen Alkylrest mit 1 bis 18 C-Atomen bedeutet;
R⁶ einen Alkylrest mit 8 bis 18 C-Atomen bedeutet;
und n eine ganze Zahl von 2 bis 4 bedeutet.

Besonders bevorzugt wird ein Verfahren angewendet, bei dem eine antimikrobielle Komponente (K) der allgemeinen Formel (I) verwendet wird, wobei die Reste unabhängig voneinander folgende Bedeutungen haben
R¹, R² und R³ gleich sind und einen verzweigten oder nicht verzweigten Alkylrest mit 1 bis 4 C-Atomen bedeuten,
n eine ganze Zahl von 1 bis 4 ist
R⁴ gleich Methyl ist,
R⁵ gleich Alkyl mit 1 bis 12 C-Atomen ist, und
R⁶ gleich Alkyl mit 8 bis 18 C-Atomen ist.

Bevorzugt wird ferner ein Verfahren angewendet, bei dem eine antimikrobielle Komponente (K) und zusätzlich eine Metallsalz-Komponente (M) verwendet werden, wobei diese Metallsalz-Komponente (M) mindestens ein Salz eines zweiwertigen, dreiwertigen oder vierwertigen Metalls enthält. In einer speziellen Ausführungsform besteht die Metallsalz-Komponente (M) aus einem oder zwei Salzen eines zweiwertigen, dreiwertigen und/oder vierwertigen Metalls. Als Metallsalz-Komponente (M) wird geme mindestens ein Salz eines zweiwertigen, dreiwertigen oder vierwertigen Metalls aus der Gruppe folgender Metalle eingesetzt:
Mg, Ca, Ba, Zn, Sn; Al, Ga, Fe; und Ti.

Als Metallsalz-Komponente (M) wird gerne eine Metallsalz-Komponente (M) eingesetzt, die mindestens ein Salz eines zweiwertigen Metalls aus der Gruppe Mg, Ca, Ba, Zn und/oder ein Salz eines dreiwertigen Metalls aus der Gruppe Al und Fe enthält, wobei der Kombination von Ca mit Al oder Fe besondere Bedeutung zukommt. Insbesondere die Kombination von Aluminium-III-Salzen mit zweiwertigen Metallsalzen hat sich bewährt.

In einer bevorzugten Ausführungsform betrifft die Erfindung eine Zusammensetzung, die als organische Komponente (K) der allgemeinen Formel (I) ein Dimethyl-tetradecyl-(3-(trimethoxysilyl)-propyl)-ammonium-Salz, z. B. das Chlorid, oder ein Dimethyl-octadecyl-(3-(trimetlioxysilyl)-propyl)-ammonium-Salz, z. B. ein Chlorid, enthält und als Metallsalz-Komponente (M) ein Salz eines zweiwertigen Metalls aus der Gruppe Mg, Ca, Zn und/oder ein Salz eines dreiwertigen Metalls aus der Gruppe Al und Fe enthält.

Dabei sind als Gegen-Ionen in den Metallsalzen verschiedene Anionen geeignet, z. B. die Chloride, Hydroxide, Sulfate, Phosphate und Acetate.

Die erfindungsgemäßen antimikrobiellen Zusammensetzungen enthalten die beiden Komponenten (organische Komponente (K) und Metallsalzkomponente (M)) vorzugsweise in bestimmten Mengen. Dabei wird im Rahmen der vorliegenden Erfindung eine Angabe in Gew.-% verwendet.

Textilvor- oder Nachbehandlungsmittel können in fester, flüssiger bzw. fliessfähiger Form, z. B. als Gel, Pulver, Granulat, Paste oder Spray vorliegen und die oben genannten erfindungsgemässen Komponenten enthalten.

Die Zusammensetzungen enthalten die Mctallsalzkomponente (M) vorzugsweise in Mengen von 0,01 bis 20 Gcw.-%, bevorzugt 0,01 bis 10 Gew.-%, mehr bevorzugt von 0,05 bis 2,0 Gew.-% und insbesondere von 0,02 bis 2,0 Gew.-%, bezogen auf die Gcsamtzusammensetzung.

Die organische Komponente (K) wird bevorzugt, bezogen auf das Gesamtgewicht der Zusammensetzung in einer Menge von 0,01 Gew.-% bis 10 Gew.-%, bevorzugt 0,1 Gew.-% bis 3,0 Gew.-%, und insbesondere von 0,3 Gew.-% bis 2,5 Gew.-%, eingesetzt.

Das Verhältnis zwischen Metallkomponente (M) und organischer Komponente (K) ist abhängig von dem eingesetzten Metallsalz und beträgt in der antimikrobiellen Zusammensetzung bezogen auf die eingesetzten molaren Mengen z. B. von 1 : 20 bis 20 : 1, insbesondere von 1 : 10 bis 10 : 1. Wird z. B. ein dreiwertiges Metallsalz eingesetzt, so ist das Verhältnis der Komponenten häufig von 2:1 bis 1:2, insbesondere etwa 1:1. Bevorzugt werden zudem Mischungen von zwei-und dreiwertigen Metallsalzen eingesetzt.

Eine weitere Ausführungsform betrifft ein Verfahren, bei dem eine antimikrobielle Komponente (K) verwendet wird, die ein Dimethyl-tetradecyl-(3-(trimethoxysilyl)-propyl)-ammonium-Salz oder ein Dimethyl-octadecyl-(3-(trimethoxysilyl)-propyl)-ammonium-Salz enthält, und wobei zusätzlich gegebenenfalls eine Metallsalz-Komponente (M) verwendet wird, die ein Salz eines zweiwertigen Metalls aus der Gruppe Mg, Ca, Zn, Ba und/oder ein Salz eines dreiwertigen Metalls aus der Gruppe Al und Fe enthält.

Als Lösungsmittel wird für beide Verfahrensschritte a) und c) bevorzugt Wasser eingesetzt. Gegebenenfalls können zusätzlich ein Alkohol, z. B. Ethanol, Methanol, Isopropanol oder Propanol verwendet werden. Die Zubereitungen können auch verschiedene Hilfskomponenten enthalten, z. B. einen pH-Puffer (wie Essigsäure/Natriumacetat) oder eine Säure (wie Ameisen-, Citronen- oder Essigsäure).

Die Zusammensetzung enthält ferner in einer weiteren Ausführungsform der Erfindung zum Beispiel eines oder mehrere der folgenden Hilfsmittel:
pH-Puffer, Weichmacher, Fluorcarbonc, Hydrophobierungsmittel, Oleophobicrungsmittel, Binder, Vernetzer, Flammschutzmittel, Textilfarbstoffe, Nähbarkeitsverbesserer und Schmutzabweisende Mittel.

Eine bevorzugte Ausführungsform betrifft ein Verfahren, bei dem eine wässrigen Lösung einer organischen Primer-Komponente (P) verwendet wird, wobei diese Lösung von 0,001 bis 25 Gew.%, in der Praxis auch 0,01 bis 15 Gew.%, insbesondere 0,02 bis 10 Gew.-%, und bevorzugt von 0,1 bis 3 Gew.% der Primer-Komponente (P) enthält. Statt einer Primer-Verbindung können auch zwei, drei oder mehrere Primer zusammen oder zeitlich abgestuft eingesetzt werden.

Die Mengenangabe der Komponenten in der Flotte ist technisch nur bedingt sinnvoll, da das Flottenverhältnis keine vorgegebene Größe ist und in der Praxis von ca. 1:4 (Masse Textil : Masse Flotte) bis zu 1:20 und in extremen Fällen sogar noch deutlicht höher geht. Der bevorzugte Konzentrationsbereich für den Primer P, beispielsweise 1-Phenylalanin, bezogen auf die Textilmasse ist im Bereich 1 bis 3%, z.B. ca. 2%. Wenn beispielsweise mit einem Flottenverhältnis von 1:5 gearbeitet wird, dann bedeutet das, dass in der Flotte zwischen 0,2 und 0,6 Gew.% 1-Phenylalanin sind. Wird ein etwas anders konstruierter Apparat gewählt, der aber das gleiche Resultat, nämlich 1 bis 3% 1-Phenylalanin auf dem Textil, bei einem ähnlichen Ausziehprozess erbringt, aber die Flotte im Verhältnis 1:20 verwendet wird, so ist in der Flotte 1-Phenylalanin in einem Konzentrationsbereich von 0,05 bis 0,15%.

Eine weitere Ausführungsform betrifft ein Verfahren, bei dem eine wässrigen Lösung einer antimikrobiellen Komponente (K) verwendet wird, wobei diese Lösung von 0,01 bis 10 Gew.%, vorzugsweise 0,1 bis 10 Gew.%, in manchen Fällen auch von 0,1 bis 3 Gew.% der antimikrobiellen Komponente (K) enthält. Diese Lösung kann auch zusätzlich von 0,01 bis 10 Gew.%, insbesondere von 0,05 bis 2 Gew.% einer Metallsalzkomponente (M) enthalten.

Häufig wird eine Menge von 0,3 bis 10 Gew.% der Komponente (K) bezogen auf das Gewicht des Textils eingesetzt.

Eine weitere Ausführungsform betrifft ein Verfahren, bei dem eine Zusammensetzung eingesetzt wird, die 0,01 bis 10 Gew.% der Primer-Komponente (P), 70 bis 99,9 Gew.% des Lösungsmittels Wasser, sowie gegebenenfalls 0,01 bis 10 Gew.-% einer antimikrobielle Komponente (K) und gegebenenfalls von 0,01 bis 10 Gew.%, einer Metallsalzkomponente (M) sowie 0,1 bis 30 Gew.% an Hilfskomponenten enthält.

Die Formulierung der Zusammensetzung kann je nach Art der zu behandelnden Textilien und nach Art der einzusetzenden Verfahren (z.B. ein- oder zweibadiges Ausziehverfahren im Normaltemperatur- oder im Hochtemperaturbereich, mit oder ohne Spülen oder Zwischentrocknung der Applikation der Primerkomponente im Ausziehverfahren gefolgt von der Applikation der antimikrobiellen Komponente (K) mit oder ohne der Metallsalzkomponente (M) im "ein-Bad-Foulard-Verfahren" (somit dem klassischen Foulardverfahren), Sprühverfahren, Beschichtung, Schaumauftrag, "zwei-Bad-Foulard-Verfahren" nass in nass oder mit Zwischentrocknung).

Die Erfindung betrifft auch ein Verfahren, bei dem eine Zusammensetzung eingesetzt wird, die 0,3 bis 2,5 Gew.% der antimikrobiellen Komponente (K), 70 bis 99,5 Gew.% des Lösungsmittels Wasser sowie 0,1 bis 30 Gew.% an Hilfskomponenten und gegebenenfalls 0,2 bis 2,0 Gew.% der Metallsalz-Komponente (M) enthält.

Ein weiterer wichtiger Gegenstand der Erfindung ist eine chemische Zusammensetzung für die Ausrüstung von Textilien oder Fasern, enthaltend 0,01 bis 20 Gew.% einer Primer-Komponente (P), welche die Hydrophobie der Oberfläche der Textilien oder Fasern vergrößert, 70 bis 99,5 Gew.% des Lösungsmittels Wasser sowie 0,1 bis 30 Gew.% an Hilfskomponenten, sowie gegebenenfalls 0,01 bis 10 Gew.-% einer organischen quaternäre Ammoniumverbindung als antimikrobielle Komponente (K), sowie gegebenenfalls von 0,01 bis 20 Gew.%, einer Metallsalzkomponente (M),wobei die Primer-Komponente (P) aus einer oder mehrerer der folgenden Verbindungen besteht: aromatische Mono- und Dicarbonsäuren, wobei diese auch durch Hydroxy-Gruppen substituiert sein können; aromatische Mono- und Diamine: aromatischen Mono- und Dialkohole; aliphatische Mono- oder Dicarbonsäure mit 6 bis 26 C-Atomen, wobei diese auch durch Hydroxy- oder Amino-Gruppen substituiert sein können; aliphatische, primäre, sekundäre und tertiäre Amine mit 6 bis 26 C-Atomen; aliphatische, primäre und sekundäre Alkohole mit 6 bis 26 C-Atomen: aliphatische, primäre Mercaptane mit 6 bis 26 C-Atomen: Aminosäuren.

Ein technisch sinnvoller Bezug der Metall-Salzkonzentration ist der antimikrobielle Wirkstoff. Der Wirkstoff ist vorzugsweise dreiwertig, d.h. 1 Mol des Wirkstoffs kann theoretisch mit einem Mol eines dreiwertigen Metallsalzes oder mit 1,5 Mol eines zweiwertigen Salzes vollständig abreagieren und mit Mischungen entsprechend. Die tatsächlichen Einsatzkonzentrationen wurden experimentell bestimmt. Die Salze werden oft im Überschuss verwendet. Es können z.B. pro kg Sanitized T 99-19 (0,91 Mol Wirkstoff) 1,26 Mol Magnesiumchlorid und 0,31 Mol Aluminiumchlorid eingesetzt werden. Die Verdünnung dieser Mctallsalzc kann variiert werden und ist eine Frage der leichten Handhabbarkeit. Der Bereich der Einsatzkonzentrationen der Metallsalze kann auch entweder auf den Wirkstoff oder auf das Textil bezogen werden.

Da diese Formulierungen vor dem Einsatz auf den Textilien oftmals einem Verdünnungsschritt unterzogen werden, beispielsweise durch Zusatz von Wasser oder Einbringung in eine Flotte, können die einzelnen Komponenten in der Zusammensetzung höher dosiert sein als bei der Anwendung am Textil. Es ist auch möglich, die Komponenten auf mehrere Zusammensetzungen zu verteilen und z. B. als Kit bereit zu stellen (Kid-of-parts).

Bevorzugt enthält die Zusammensetzung zur Aufbringung des Primers 0,01 bis 20 Gew.% einer Primer-Komponente (P), 70 bis 99,5 Gew.% des Lösungsmittels Wasser sowie 0,1 bis 30 Gew.% an Hilfskomponenten.

Eine weitere Ausführungsform betrifft eine Zusammensetzung, die 0,01 bis 20 Gew.% einer Primer-Komponente (P), 70 bis 95 Gew.% des Lösungsmittels Wasser, 0,1 bis 30 Gew.% an Hilfskomponenten, und ebenfalls 0,01 bis 10 Gew.-% einer organischen quaternäre Ammoniumverbindung, sowie gegebenenfalls von 0,01 bis 20 Gew.%, einer Metallsalzkomponente (M) enthält. Diese Zusammensetzung ist z. B. für ein "ein-Bad-Verfahren" besonders geeignet.

Eine weitere Ausführungsform betrifft eine Zusammensetzung, die 0,01 bis 20 Gew.% einer Primer-Komponente (P) enthält, wobei die Primer-Komponente (P) aus einer oder mehrerer der der folgenden Verbindungen besteht: aromatische Mono- und Dicarbonsäuren, wobei diese auch durch Hydroxy-Gruppen substituiert sein können; aromatische Mono- und Diamine, aromatischen Mono- oder Dialkohole; aliphatische Mono- und Dicarbonsäure mit 6 bis 26 C-Atomen, wobei diese auch durch Hydroxy- oder Amino-Gruppen substituiert sein können; aliphatische, primäre und sekundäre Amine mit 6 bis 26 C-Atomen; aliphatische, primäre und sekundäre Alkohole mit 6 bis 26 C-Atomen; aliphatische, primäre Mercaptane mit 6 bis 26 C-Atomen; Aminosäuren.

Die Erfindung betrifft auch eine Zusammensetzung, die 0,05 bis 15 Gew.% einer Primer-Komponente (P) enthält, wobei die Primer-Komponente (P) aus einer oder mehrerer der der folgenden Verbindungen besteht: aromatische Mono- und Dicarbonsäuren, wobei diese auch durch Hydroxy-Gruppen substituiert sein können; aliphatische Monocarbonsäure mit 6 bis 26 C-Atomen; aliphatische, primäre Alkohole mit 6 bis 26 C-Atomen; primäre Amine mit 6 bis 26 C-Atomen; natürliche Aminosäuren.

Die Erfindung betrifft auch ein Verfahren zur Herstellung der oben beschriebenen Zusammensetzungen, bei dem die einzelnen Komponenten gemischt werden. Ein weiterer Aspekt der vorliegenden Erfindung ist die Verwendung einer oben beschriebenen Zusammensetzungen zur Behandlung von Textilien, Fasern und Garnen, die synthetische Materialien enthalten oder die aus synthetischen Materialien bestehen, für eine antimikrobielle Ausrüstung. Dabei eignen sich die Zusammensetzungen insbesondere für die Ausrüstung von Textilien aus Polyester, Polyamid und Mischgeweben, die mindestens eine dieser Komponenten enthalten.

Die Verwendung erfolgt bevorzugt zur Ausrüstung von Textilien, Fasern und Garnen, die im Wesentlichen aus Polyamid und/oder Polyester bestehen. Die Ausrüstung von Textilien, Fasern und Garnen erfolgt z. B. mittels Foulardverfahren, Schaumauftrag, Sprühverfahren, Beschichtung oder Ausziehverfahren (Auszugsmethode), wobei auch mehrere dieser Verfahren in Kombination zur Anwendung kommen können. So kann zunächst z. B. der Primer über ein Foulardverfahren oder Ausziehverfahren aufgebracht werden und anschließend (ggf. nach Trocknung) eine Applikation der antimikrobiellen Komponente über ein Foulardverfahren oder Ausziehverfahren (z. B. Jet) erfolgen.

Nach der Behandlung kann vorzugsweise ein (weiterer) Trocknungsschritt d) erfolgen, z. B. auf dem Spannrahmen oder im Tumbler oder mit einer Methode der Kontakthitze.

Bei Verwendung des "ein-Bad-Verfahrens" kann die Applikation der Zusammensetzung z. B mit einer Zwangsapplikationsmethode wie im Foulardverfahren, durch Sprühen, Schaumauftrag oder durch Beschichtung erfolgen. Auch die Durchführung eines Ausziehverfahrens ist möglich.

Ein weiterer Gegenstand der Erfindung sind Textilien, Fasern und Garne ausgerüstet mittels eines Verfahrens wie oben beschrieben. Die antimikrobiell ausgerüsteten Fasern und Textilien können als Ausgangsprodukt für diverse Materialien für verschiedene Produkte wie Kleidung (z. B. Damenoberbekleidung, Herrenbekleidung, Kinderbekleidung, Sport- und Freizeitbekleidung, Schutz- und Berufsbekleidung, Uniformen, Futterstoffe, Socken, Strümpfe und Unterwäsche), Bettzeug (z. B. Bettbezug und Laken), Heimtextilien, Sitzbezüge, Polsterstoffe, Möbelbezugsstoffe, Textilien für Schuhe, Duschvorhänge, Frottecartikel, Wischtücher, Putzmops, Filter, Teppiche, Watte und Vliese, Dämm- und Isoliermatten, textile Tapeten, Vorhänge, Handtuchrollen, Schutzartikel (z. B. Maske und Bandage), Textilien für Automobile, öffentliche Verkehrsmittel (Bahnen, Busse, Flugzeuge, Schiffe, etc.) und ähnliches verwendet werden.

Die in der vorliegenden Erfindung verwendete Basisfaser kann z.B. eine synthetische (chemische) Faser sein. Die chemischen Fasern sind beispielsweise Polyamidfaser, Polyesterfaser und deren Mischungen. Im Prinzip kann das erfindungsgemäße Verfahren auch angewendet werden auf eine Polypropylenfaser, Polyvinylfaser, Polyacrylfaser, Polyurethanfaser, Polyethylenfaser, Polyvinylidenfaser und Polystyrolfaser. Das Verfahren kann auch auf Mischfasern mit synthetischen und natürlichen Anteilen angewendet werden.

Zur Lösung der eingangs genannten Aufgaben wurden zahlreiche Versuche unternommen, auf der Oberfläche oder im oberflächennahen Bereich der Synthesefasern solche Moleküle als Primerkomponente (P) auf beziehungsweise einzubringen, die über reaktive Gruppen verfügen, die dann mit der organischen quaternären Ammoniumverbindung eine kovalente Bindung bilden können. Als Bindungspartner kommen u. a. solche Strukturen in Frage, die eine stabile Bindung zu dem Siliziumatom der quaternären Ammoniumverbindung der allgemeinen Formel (I) bilden können. In Frage kommen insbesondere z. B. Verbindungen, die mindestens ein acides Wasserstoffatom an einem Heteroatom tragen.

Wegen der sehr hohen Bindungsstärke der resultierenden Bindung zum Siliziumatom sind Gruppen mit dem Strukturelement C-OH bevorzugt. Hier bieten sich insbesondere die oben genannten organischen Moleküle an wie Alkohole, Phenole, Carbonsäuren und Aminosäuren. Ferner kommen auch Moleküle in Frage, die mehrere der genannten Gruppen tragen. Dabei besteht grolic Variabilität darin, wie der weitere Aufbau des Moleküls aussieht, in Frage kommen auch Amino- oder Mercapto-Gruppen tragende Verbindungen.

Der Teil der Struktur, der nicht dazu gedacht ist, mit der polaren Gruppe der quaternären Ammoniumverbindung zu reagieren, sollte eine andere Funktion zu übernehmen. Er soll auf der Synthesefaser, z. B. dem Polyester oder Polyamid, möglichst gut zu verankern sein. Das wird z. B. dadurch erreicht, dass die gewählten Moleküle in der Polyesteroberfläche gut zu lösen sind. Dabei sollten die unpolaren Molekületeile ausreichend gross sein, damit ein Teil des Moleküls im Polymer verankert wird und die funktionellen Gruppen für die Bildung der kovalenten Bindung z. B. zur Siloxangruppe der quaternären Ammoniumverbindung zur Verfügung steht.

Für die Ausrüstung mit Primern (P) wird in einer Ausführungsform der Erfindung ein zweistufiges Verfahren gewählt. Zuerst wird der Primer aufgebracht (Verfahrensschritt a). Das kann z. B. sowohl im Ausziehverfahren bei üblichen Bedingungen als auch im Foulardverfahren durchgeführt werden. Das Textil wird danach vorzugsweise getrocknet (Verfahrensschritt b). In einem nachfolgenden Verfahrensschritt (c) wird dann z. B. mittels Foulardverfahren die quaternäre Ammoniumverbindung, insbesondere eine Verbindung der allgemeinen Formel (I) aufgebracht.

Bevorzugt wird häufig ein Einbadverfahren verwendet, d.h. in einem ersten Schritt wird der Primer (P) appliziert und anschließend im selben Bad die antimikrobielle Komponente (mit und ohne Metallsalzkomponente). Anschließend wird die Flotte abgelassen, ggf. kurz gespült und dann getrocknet (und allenfalls noch kondensiert).

Als Primerkomponente (P) wurden in den nachfolgenden Beispielen unter anderem folgende Verbindungen getestet:
Gallussäure (3,4,5-Trihydroxybenzoesäure, m_{M}: 170,12 CAS: 149-91-7),
Terephthalsäure (Benzol-1,4-dicarbonsäure, m_{M}: 166,13, CAS: 623-27-8),
Gerbsäure (Gallotannin, Tannin, m_{M}:1701,2, CAS: 1401-55-4),
Stearinsäure (Octadecansäure, m_{M}: 284,48, CAS: 57-11-4),
Octadecylamin (mM:269,51, CAS: 124-30-1),
diverse Aminosäuren, z. B. 1-Phenylalanin (mM:165,19, CAS: 63-91-2).

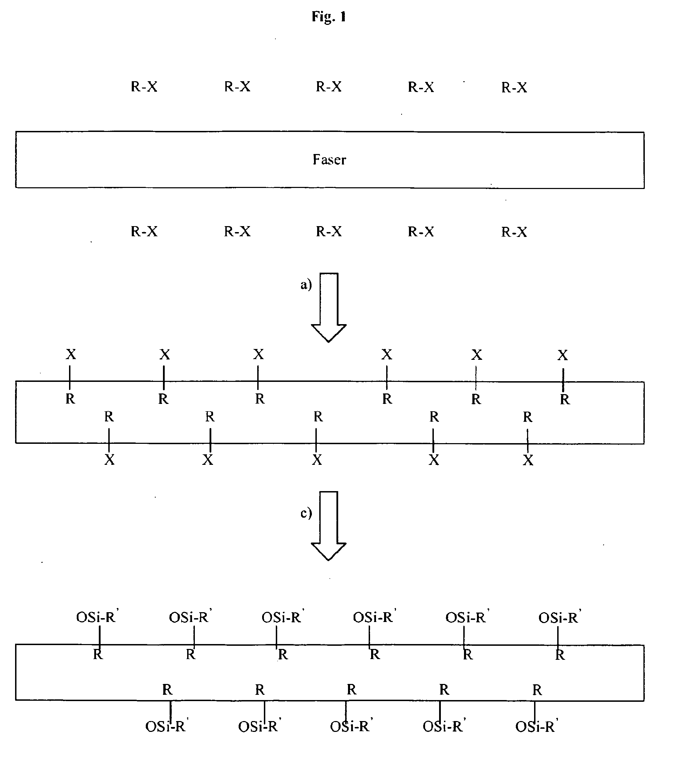

Eine modellhafte Erklärung für das angewandte Verfahren zur antimikrobiellen Ausrüstung wird in Figur 1 graphisch dargestellt, wobei diese Angaben in keiner Weise limitierend zu interpretieren sind. Man bringt auf eine Faser eine Primerkomponente (P) auf, z. B. eine Verbindung R-X, wobei R z. B. ein Allylrest ist und X z. B. eine Carboxylgruppe bedeutet.
Im Verfahrensschritt a) wird die Faser mit der wässrigen Lösung des Primers und ggf. Wärme, Säure- oder Basenzusatz, Tensiden, Trägermitteln und/oder Reduktionsmitteln behandelt.

Es entsteht die mit dem Primer ausgerüstete Faser. Diese kann dann ggf. getrocknet werden.
Im Verfahrensschritt c) wird dann die quaternäre Ammoniumverbindung aufgebracht, z. B. eine Silicium-organisches Amin mit einer Alkylgruppe R' wie oben beschrieben. Es entsteht die dauerhaft ausgerüstete Faser.

Die Erfindung betrifft somit auch eine in situ hergestellte Zusammensetzung, die neben dem Lösungsmittel Wasser zum einen 0,05 bis 15 Gew.% einer Primer-Komponente (P), insbesondere der folgenden Primer-Komponenten (P) enthält: aromatische Mono- oder Dicarbonsäuren, wobei diese auch durch Hydroxy-Gruppen substituiert sein können; aliphatische Monocarbonsäure mit 6 bis 26 C-Atomen; aliphatische, primäre Alkohole mit 6 bis 26 C-Atomen; primäre Amine mit 6 bis 26 C-Atomen; natürliche Aminosäuren; und dass sie zum anderen 0,01 bis 10 Gew.-% an antimikrobieller Komponente, insbesondere an Dimethyl-tetradecyl-(3-(trimethoxysilyl)-propyl)-ammonium-Salz oder Dimethyl-octadecyl-(3-(trimethoxysilyl)-propyl)-ammonium-Salz enthält, und zusätzlich gegebenenfalls eine Metallsalz-Komponente (M) enthält, die aus mindestens einem Salz eines zweiwertigen Metalls aus der Gruppe Mg, Ca, Zn, Ba und/oder ein Salz eines dreiwertigen Metalls aus der Gruppe Al und Fe besteht.

Die nachfolgenden Beispiele erläutern weitere wichtige Aspekte der Erfindung.

### Beispiel 1: Zwei-Bäder-Verfahren

### Verfahrensschritt a)

1,88 g 1-Phenylalanin (als Primer-Komponente (P)) werden in 950 g Wasser gelöst. Mit Essigsäure wird der pH auf 4,5 eingestellt und mit Wasser auf 1000 g aufgefüllt. 125 g Gewebe aus Polyester mit einem Flächengewicht von ca. 220 g/m² werden auf vier Becher verteilt und das jeweils Achtfache des Warengewichts der hergestellten Flotte wird zugegeben. Die Becher werden verschlossen und das Ausziehverfahren wird mit einer üblichen Vorrichtung (Mathis Labomat BFA-12) durchgeführt. Dabei werden die Becher mit einer Aufheizgeschwindigkeit von 3°C/Min. auf 120°C aufgeheizt. Die Temperatur von 120°C wird für 45 Minuten gehalten und anschließend wird mit 3°C/Min. auf 40°C abgekühlt.

### Verfahrensschritt b)

Die Muster werden dann kurz in kaltem Wasser gespült, geschleudert und für jeweils 2 Minuten auf dem Spannrahmen bei 120°C getrocknet. Die theoretische Menge 1-Phenylalanin auf dem Textil beträgt 1,5%, bezogen auf das trockene Warengewicht.

### Verfahrensschritt c)

980 g Wasser werden in ein Becherglas gegeben. 1 g eines nichtionogenes Silicon- und lösungsmittelfreien Netz-, Wasch- und Reinigungsmittel (Hostapal MRN vom Hersteller Clariant, Schweiz; auf der Basis eines Polyglycoletherderivats) und 1 g Essigsäure (80%ig) werden unter Rühren zugegeben. Als antimikrobielle Verbindung der allgemeinen Formel (I) werden dann 18 g Sanitized T 99-19 (wie oben beschrieben) zugegeben und das Bad wird gerührt, bis es homogen ist.

Mittels Foulard wird diese Flotte auf die Muster aus Polyester appliziert, die zuvor mit 1-Phenylalanin beschichtet werden. Der pick-up beträgt 36% und somit ist die Aufnahme von Sanitized T 99-19 gerade 0,64% bezogen auf das trockene Warengewicht.

### Weiterer Trocknungsschritt

Die Muster werden auf dem Spannrahmen bei 120°C während 2 Minuten getrocknet.

### Tcstung der ausgerüsteten Textilien

Die Muster werden dann nach EN ISO 6330 (6A) bei 40°C gewaschen und jeweils nach 10, 20 und 30 Waschzyklen nach ASTM E 2149 gegen Staphylococcus aurcus ATCC 6538 geprüft. Die Keimreduktion beträgt auch nach 30 Waschzyklen noch über 10² gegenüber dem nicht ausgerüsteten Muster und ist somit ausgezeichnet.

### Beispiel 2:

Durchführung analog zu Beispiel 1, aber mit 3,1 g 1-Phenylalanin in der Auszugsflotte. Dies entspricht 2,5% der Aminosäure bezogen auf das trockene Warengewicht. Die Keimreduktion ist im Rahmen der Streuung der Methode wie beim Beispiel 1 und somit ausgezeichnet.

### Beispiele 3 und 4:

Analog den Beispielen 1 und 2 wird zuerst im Ausziehverfahren 1-Phenylalanin auf Gewebe aus Polyester (Dacron 54 spun) mit einem Flächengewicht von ca. 120 g/m² aufgebracht.
Wegen des tieferen Flächengewichts des Textils wird deutlich mehr, nämlich 0,9% Sanitized T 99-19 appliziert, so dass eine ähnliche Masse des Produktes pro Flächeneinheit zur Verfügung steht. Auch bei diesen Versuchen wird nach 30 Waschzyklen eine Keimreduktion von etwas über 10² erreicht.

### Beispiele 5 bis 8:

Bei diesen Beispielen wird jeweils ein anderer Polyestertyp jeweils mit 1,5 beziehungsweise 2,5% 1-Phenlyalanin ausgerüstet. Bei den Beispielen 5 und 6, wo mit einem Polyestertyp (Interlock mit ca. 200 g/m²) gearbeitet wird, mit 0,6 % Sanitized T 99-19 und bei den Beispielen 7 und 8 mit einem Gewebe aus Polyester (von Tersuisse) mit 230 g/m² ebenfalls mit 0,6 g/m² ausgerüstet. Auch diese Muster zeigen nach 30 Waschzyklen eine Reduktion der Keimzahl gegenüber dem Ausgangswert von mindestens 2 Zehnerpotenzen.

Durch diese Beispiele kann gezeigt werden, dass die Art und Herkunft des Polyesters keinen wesentlichen Einfluss auf das antibakterielle Ergebnis auch nach wiederholtem Waschen zeigt.

Da der Einsatz von Aminosäuren als Textilchemikalie nicht zu den gängigen Methoden in der Textilindustrie gehört und das Produkt zudem die Ausrüstung deutlich verteuern kann, werden noch weitere Systeme ausgetestet.

### Beispiele 9 und 10:

1,25 g beziehungsweise 2,5 g Stearinsäure werden in 990 g Wasser bei Raumtemperatur dispergiert und mit 1,5 beziehungsweise 3 g Kaliumhydroxid versetzt. 90 Minuten auf dem Magnetrührer bei Raumtemperatur rühren und dann mit Essigsäure auf pH 6,5 einstellen. Diese Flotten werden analog dem Beispiel 1 auf Polyester Trevira mit einem Flächengewicht von ca. 220 g/m2 appliziert und getrocknet.

Im Beispiel 9 mit 1,0 % Stearinsäure auf dem Gewebe wird auf das Polyester 0,6% Sanitized T 99-19 und im Beispiel 10 mit 2,0% Stearinsäure auf dem Gewebe werden 0,8% Sanitized T 99-19 mittels Foulardverfahren appliziert.

Nach 20 Waschzyklen wird beim Beispiel 9 eine Reduktion der Keimzahl um knapp drei Zehnerpotenzen gefunden und beim Beispiel 9 sogar um eine von gut vier Zehnerpotenzen.

Der Einsatz von einer langkettigen Carbonsäure zur Lösung der Aufgabe funktioniert allgemein, d.h. es ist möglich, das Sanitized T 99-19 auch auf Polyester, das mit z. B. Stearinsäure als Primer (P) ausgerüstet wird, waschbeständig gemäss der Aufgabenstellung zu applizieren.

### Beispiele 11 bis 13:

Anstelle der Stearinsäure werden 2,5 g Gerbsäure in Wasser gelöst und auf 1000 g eingestellt. Der Vorteil dieser Säure ist die gute Löslichkeit in Wasser. Die Applikation auf das Gewebe aus Polyester erfolgte gleich wie in Beispiel 1 beschrieben aber bei dieser wie den beiden nachfolgend aufgeführten Beispielen werden jeweils 12 g Essigsäure pro Liter zugegeben.

Das Textil verfärbt sich bei der Behandlung jedoch stark. Es wird wie in dem Beispiel 1 beschrieben mittels der Foulardmethode mit 0,6% Sanitizcd T 99-19 ausgerüstet und geprüft. Nach 20 Waschzyklen wird noch eine Abnahme der Keimzahl um einen Faktor größer als zehn gegenüber dem Kontrollmuster gefunden. Die starke Verfärbung der Flotte und des Textils ist jedoch weniger wünschenswert.

Es wird nun neben 1,5 g Gerbsäure die gleiche Menge Natriumdisulfit (Na₂S₂O₅) in Wasser gelöst, auf 1000 g aufgefüllt und wiederum mit dem nach Ausziehverfahren nach Beispiel 1 auf Polyester appliziert. Damit kann die Verfärbung von Flotte und Textil weitgehend unterdrückt werden.

Auch die antibakteriellen Werte nach Applikation von Sanitized T 99-19 mit anschließenden Wäschen zeigt bessere Werte als im Beispiel zuvor aber an sich immer noch nur genügend.

Besonders gute Resultate werden erreicht, indem neben 1,5 g Gerbsäure 1,5 g Natriumsulfit (Na₂SO₃) in Wasser gelöst und auf 1000 g aufgefüllt werden. Auch die antibakteriellen Werte nach Applikation von Sanitized T 99-19 mit anschließenden Wäschen zeigen verbesserte Werte. Mit Natriumthiosulfat gelingt es nicht, die Verfärbung zu verhindern.

### Beispiele 14 bis 16:

Die Beispiele 14 bis 16 werden analog zu den Beispielen 11 bis 13 durchgeführt.
Anstelle der Gerbsäure werden pro Liter Flotte 1,5 g Gallussäure Monohydrat eingesetzt, und in den Beispielen 15 und 16 mit je 1,5 g Natriumdisulfit beziehungsweise Natriumsulfit. Allerdings zeigt die Gallussäure nicht diese starken Verfärbungen wie die Gerbsäure.
Nach 20 Waschzyklen ist die Reduktion der Keimzahl aufsteigend von Beispiel 14 bis 16 von einer Reduktion von etwas über einer Zehnerpotenz zu knapp zwei Zehnerpotenzen zu etwas über zwei Zehnerpotenzen.

### Beispiele 17 und 18:

Es wird versucht, die Waschfestigkeit noch weiter zu erhöhen, indem das Polyestergewebe vor der Applikation der Gallussäure beziehungsweise Gerbsäure reduktiv gereinigt wird.

Dazu wird das Textil bei 80°C mit der 10 fachen Masse einer Lösung aus 5 g/1 Natriumdithionit, 8 g/1 einer 20 %-igen Natronlauge und 5 g/l Hostapal MRN (Hersteller: Clariant) während 20 Minuten behandelt.

Die Lösung wird anschließend entfernt und das Textil wird mit ca. 50°C warmen Wasser und anschließend mit ca. 15°C kaltem Wasser gespült, geschleudert und getrocknet. Das so vorbehandelte Textil wird mit einer wässrigen Lösung von 0,15 % Gerbsäure beziehungsweise 0,15% Gallussäure Monohydrat bei 40°C während 20 Minuten und einem Flottenverhältnis von 1:10 behandelt. Die Lösung wird abgegossen, das Textil kurz kalt gespült, geschleudert und auf dem Spannrahmen bei 120°C während 2 Minuten getrocknet.

Das wie beschrieben vorbehandelte und mit den Primern (P) beschichtete Textil wird im Foulardverfahren mit 0,5% Sanitized T 99-19 ausgerüstet und anschließend auf dem Spannrahmen bei 120°C für zwei Minuten getrocknet.

Diese Muster werden in Schritten bis auf 30 Waschzyklen gewaschen und nach JISL 1902:2002 gegen Staphylococcus aureus ATCC 6538 geprüft. Die Resultate der Muster mit der Gerbsäure als Primer fallen schlechter aus und erreichen nach 20 Waschzyklen noch eine Keimzahlreduktion von 10^{1,5} gegenüber den Mustern mit Gallussäure als Primer, wo die Reduktion der Keimzahl nach 30 Waschzyklen noch 10^{2,0} beträgt.

Bei weiteren Versuchen wird festgestellt, dass die Auszugsbedingungen von Gallussäure bei Temperaturen bei 80°C bessere Resultate liefern als wenn der Auszug unter Hochtemperaturbedingungen, bei den Versuchen 120°C, durchgeführt wird. Es wird ebenfalls festgestellt, dass die Einsatzmenge in einem sehr breiten Bereich von 1 % bis 2,5% Gallussäure bezogen auf die Masse des Textils keinen deutlichen Einfluss hat.

Die Verwendung von Terephthalsäure und Octadecylamin als Primcr (P) zeigt eine Verbesserung der antimikrobiellen Wirkung nach Wäschen, aber die Wirkung ist weniger ausgeprägt als bei den Stoffen Gerbsäure, Gallussäure oder Stearinsäure oder insbesondere 1-Phenylalanin.

### Beispiel 19:

1,88 g 1-Phenylalanin werden in 950 g Wasser gelöst, mit Essigsäure wird der pH auf 4,5 eingestellt und mit Wasser auf 1000 g aufgefüllt. 125 g Gewebe aus Polyester mit einem Flächengewicht von ca. 220 g/m² werden auf vier Becher verteilt und das jeweils Achtfache des Warengewichts der hergestellten Flotte wird zugegeben. Die Becher werden verschlossen und das Ausziehverfahren wird mit einem Mathis Labomat BFA-12 durchgeführt. Dabei werden die Becher mit einer Aufheizgeschwindigkeit von 3°C/Min. auf 80°C aufgeheizt.

80°C werden für 60 Minuten gehalten und anschließend wird mit 3°C/Min. auf 40°C abgekühlt. Die Muster werden kurz in kaltem Wasser gespült, geschleudert und für jeweils 2 Minuten auf dem Spannrahmen bei 120°C getrocknet. Die theoretische Menge 1-Phenylalanin auf dem Textil beträgt 1,5% bezogen auf das trockene Warengewicht.

782 g Wasser werden in ein Becherglas gegeben. 1 g Hostapal MRN (ein nichtionogenes Silicon-und Lösungsmittelfreies Netz-, Wasch- und Reinigungsmittel von Clariant auf der Basis eines Polyglycoletherderivats) und 1 g Essigsäure 80% werden unter Rühren zugegeben.

216 g Dimethyl-octadecyl-[3-(trimethoxysilyl)-propyl]-ammoniumchlorid als wässrige Lösung (unter dem Handelsnamen Aegis AEM 5772/5 erhältlich) werden zugegeben und das Bad wird gerührt, bis es homogen ist. Mittels Foulard wird diese Flotte auf die Muster aus Polyester appliziert, die mit L-Phenylalanin beschichtet sind.

Der pick-up beträgt 38% und somit ist die Aufnahme von der wässrigen Lösung des Dimethyl-octadecyl-[3-(trimethoxysilyl)-propyl]-ammoniumchlorids 8,2 % bezogen auf das trockene Warengewicht. Die Muster werden auf dem Spannrahmen bei 120°C während 2 Minuten getrocknet. Die Muster wrrden nach EN ISO 6330 (6A) bei 40°C gewaschen und jeweils nach 10 und 20 Waschzyklen nach JIS L 1902:2002 gegen Staphylococcus aureus ATCC 6538 geprüft. Die gefundene Keimzahl beträgt auch nach 20 Waschzyklen noch knapp 1% gegenüber dem nicht ausgerüsteten Muster und der antibakterielle Effekt des ausgerüsteten Musters ist somit gut.

### Beispiel 20:

Es werden zwei Effekte zur Erhöhung der Waschbeständigkeit des Sanitized T 99-19 auf Gewebe aus Polyester gekoppelt.

Zuerst wird ein Primer(P) auf das Textil aufgebracht, dies wird so wie in Beispiel 1 beschrieben durchgeführt; anschließend wird das Sanitized T 99-19 in wässriger Lösung zuerst mit Metallionen, insbesondere solchen von 2- bis 4-wertigen Metallen, umgesetzt. Besonders effektiv ist dabei die Mischung aus Calcium- und Aluminiumionen, mit dem Ziel die Löslichkeit des entstehenden Produktes herabzusetzen, sobald es auf das Textil appliziert ist.

Das dermaßen ausgerüstete Textil wird auf dem Spannrahmen getrocknet und kondensiert.
2,5 g 1-Phenylalanin werden in 950 g Wasser gelöst, mit Essigsäure wird der pH auf 4,5 eingestellt und mit Wasser auf 1000 g aufgefüllt. 125 g Gewebe aus Polyester mit einem Flächengewicht von ca. 220 g/m² werden auf vier Becher verteilt und das jeweils Achtfache des Warengewichts der hergestellten Flotte wird zugegeben. Die Becher werden verschlossen und das Ausziehverfahren wird mit einem Mathis Labomat BFA-12 durchgeführt. Dabei werden die Becher mit einer Aufheizgeschwindigkeit von 3°C/Min. auf 80°C aufgeheizt. 80°C werden für 60 Minuten gehalten und anschließend wird mit 3°C/Min. auf 40°C abgekühlt.

Die Muster werden kurz in kaltem Wasser gespült, geschleudert und für jeweils 2 Minuten auf dem Spannrahmen bei 120°C getrocknet. Die theoretische Menge 1-Phenylalanin auf dem Textil beträgt so 2 % bezogen auf das trockene Warengewicht.

400 ml Wasser werden in einem Becherglas vorgelegt, nacheinander werden unter Rühren auf einem Magnetrührwerk 0,3 g Aluminiumchlorid Hexahydrat, 0,99 g Natriumacetat Trihydrat, 0,38 g Calciumhydroxyd, 2,47 g Essigsäure 80% 25 g Isopropanol und 4,05 g Sanitized T 99-19 zugegeben. Die Lösung wird auf 500 g mit Wasser aufgefüllt und 30 Minuten bei Raumtemperatur nachgerührt.

Mit Ameisensäure wird der pH auf 3 eingestellt und diese Flotte wird auf das Gewebe aus Polyester, das mit L-Phenylalanin behandelt wird, im Foulardverfahren appliziert, wobei bei dem pick-up von 75% eine Konzentration von 0,6% Sanitized T 99-19 auf das Textil kommt.

Das Textil wird dann 1 Minute bei 120°C auf dem Spannrahmen getrocknet und anschließend noch für zwei Minuten bei 150°C kondensiert. Nach 30 Waschzyklen nach EN ISO 6330 (6A) bei 40°C wird im Test nach JIS L 1902:2002 eine Reduktion der Keimzahl von 10^{2,8} gemessen, was ein ausgezeichneter Wert ist.

Um die Anwendung für die Textilindustrie möglichst einfach zu gestalten, wird das System so aufgebaut, dass es im "ein-Bad-Verfahren" appliziert werden kann.

Es wird dabei festgestellt, dass es kaum möglich ist, die quaternäre Ammoniumverbindung der Formel (I) zusammen mit den Produkten, die als Primer (P) eingesetzt werden sollen, in wässriger Lösung lagerstabil in Konzentrationen herzustellen, die interessant sind, das Produkt als eine fertige, anwendungsbereite Mischung in den Verkehr zu bringen. Die Mischung verändert sich in sehr kurzer Zeit erheblich. Somit wurde ein anderer Weg beschritten, so dass der Anwender vorzugsweise zwei Formulierungen handhaben sollte.

### Beispiel 21: Ausrüstung im "Ein-Bad-Verfahren"

20 g L-Phenylalanin werden in 973,1 g Wasser gelöst und mit 2,0 g Natriumacetat Trihydrat und 4,9 g Essigsäure versetzt.

885 g Wasser werden vorgelegt und dazu gibt man 100 g der Phenylalanin-Lösung mit dem Acetatpuffer, der primär den Zweck hat, Vergilbungen auf heiklen Textilien zu verhindern. Es werden 15 g Sanitized T 99-19 eingerührt. Diese Mischung wird mittels Foulard sowohl auf Gewebe aus Polyester als auch auf solches aus Polyamid appliziert, so dass zwischen 0,6 und 0,8% Sanitized T 99-19 auf die Gewebe kommen. Die so ausgerüsteten Gewebe werden für zwei Minuten auf dem Spannrahmen bei 120°C getrocknet und anschließend noch für 45 Sekunden bei 150°C kondensiert.

Die Gewebe werden bei 40°C 20 mal gewaschen und anschließend nach ASTM E 21-49 gegen Staphylococcus aureus ATCC 6538 P geprüft. Die Muster zeigen alle eine Keimreduktion von über zwei Zehnerpotenzen.

### Beispiel 22:

a) 188 g Wasser werden vorgelegt, 2 g Gallussäure zugegeben und unter Rühren werden 10 g Sanitized T 99-19 zugegeben. 45 Minuten bei Raumtemperatur rühren, auf 750 g mit Wasser auffüllen und nochmals 15 Minuten bei Raumtemperatur rühren und dann im Foulardverfahren auf Gewebe aus Polyester mit einem pick-up von 38% applizieren, so dass die Aufnahme an Sanitized T 99-19 0,5% beträgt.
b) Die gleiche Flotte wird auf Gewebe aus Polyamid appliziert, wo bei einem pick-up von 60 % eine Aufnahme von 0,8% Sanitized T 99-19 bezogen auf die Textilmasse erreicht wird.

Die beiden so ausgerüsteten Muster werden bei 40°C gewaschen und zwischen den Waschzyklen getrocknet. Nach 20 und 30 Waschzyklen wird der antibakterielle Effekt gegen Staphylococcus aureus 6538 P geprüft. Beide Textiltypen zeigen bei allen Tests eine gute antibakterielle Wirkung, wenn die Wirkung auch deutlich schwächer wird, als im ungewaschenen Zustand, wo allerdings auch eine Keimreduktionsrate von über 99,99% erreicht wird.

### Beispiel 23: Ausrüstung im "Ein-Bad-Verfahren" mit Metallkomponente

Um eine noch bessere Waschbeständigkeit zu erhalten, wird versucht die Trimethoxysiliziumgruppe der quaternären Ammoniumverbindung über mindestens zweiwertige Metallionen zu vernetzen und gleichzeitig soll ein Primer eingebaut werden.

910 g Wasser werden vorgelegt und darin werden nacheinander unter Rühren mit einem Magnetrührer 10 g L-Phenylalanin, 6 g Aluminiumchlorid Hexahydrat, 11,2 g Calciumchlorid, 1,6 g Natriumacetat Trihydrat und 3,9 g 80%igc Essigsäure gelöst.

150 g von dieser Lösung werden zu 835 g Wasser gegeben und dazu gibt man 15 g Sanitized T 99-19. Diese Mischung wird für 45 Minuten bei Raumtemperatur gerührt und anschließend mittels Foulard auf Gewebe aus Polyester appliziert.

Der pick-up beträgt 41% und somit ist die Aufnahme vom Sanitized T 99-19 0,6% bezogen auf das trockene Textilgewicht.

Die Warenmuster werden für 2 Minuten bei 150°C auf dem Spannrahmen getrocknet und kondensiert und anschließend in Schritten bis auf 30 Waschzyklen bei 40°C nach EN ISO 6330 (6A) mit ECE 77 Farbechtheitswaschmittel gewaschen und nach ASTM E 21-49 gegen Staphylococcus aureus 6538 geprüft. Die Muster zeigen alle eine gute antibakterielle Wirkung.

### Beispiel 24:

94 g Wasser werden vorgelegt, 1 g Gallussäure zugegeben und unter Rühren werden 5 g Sanitized T 99-19 zugegeben. 45 Minuten bei Raumtemperatur rühren.

Pro Hülse werden 50 g Polyestergewebe eingewogen und dazu gibt man eine Lösung von 5 g der beschriebenen Lösung in 400 g Wasser. Die Hülsen werden verschraubt unter permanenter Rotationsbewegung um 3°C pro Minute auf 120°C aufgeheizt und dann 30 Minuten bei 120°C gehalten, mit 3°C pro Minute auf 40°C abgekühlt.

Die Flotte wird abgegossen und die Textilmuster kurz mit kaltem Wasser gespült, geschleudert und dann bei 130°C für 3 Minuten auf dem Spannrahmen getrocknet.

Die Muster werden in Schritten bei 40°C bis auf 30 Waschzyklen gewaschen und nach ASTM E 21-49 gegen Staphylococcus aureus 6538 geprüft. Die Muster zeigen bis zu 15 Waschzyklen eine gute antibakterielle Wirkung.

### Beispiel 25:

2 g Phenylalanin werden in 92 g Wasser gelöst, 1 g Essigsäure 80% wird zugegeben. Unter Rühren werden 5 g Sanitized T 99-19 zugegeben. 1 Stunde bei Raumtemperatur nachrühren. Jeweils 50 g Gewebe aus Polyamid beziehungsweise aus Polyester werden mit einer Mischung aus 400 g Wasser und 5 g der Lösung mit Phenylalanin/Sanitized T 99-19 in einer Auszugshülse versetzt. Die Hülsen werden verschraubt unter permanenter Rotationsbewegung um 3°C pro Minute auf 120°C beim Polyester beziehungsweise auf 80°C beim Polyamid aufgeheizt und dann 30 Minuten bei 120°C beziehungsweise bei 80°C gehalten, mit 3°C pro Minute auf 40°C abgekühlt.

Die Flotte wird abgegossen und die Textilmuster kurz mit kaltem Wasser gespült, geschleudert und dann bei 130°C für 3 Minuten auf dem Spannrahmen getrocknet.

Die Muster werden bei 40°C bis auf 30 Waschzyklen gewaschen und in Fünferschritten nach ASTM E 21-49 gegen Staphylococcus aureus 6538 geprüft. Die Muster zeigen bis zu 10 Waschzyklen beim Polyamid beziehungsweise 15 Waschzyklen beim Polyester eine sehr gute antibakterielle Wirkung.

### Beispiel 26:

964 g Wasser wrrden in einem Becherglas vorgelegt. Dazu gibt man unter Rühren nacheinander 2,2 g L-Phenylalanin, 2,0 g Natriumacetat Trihydrat, 4,9 g 80%ige Essigsäure, 2,5 g Zinkchlorid, 1,4 g Aluminiumchlorid Hexahydrat, lässt 5 Minuten bei Raumtemperatur rühren und gibt dann 20 g Sanitized T 99-19 zu.

Diese Mischung lässt man für eine Stunde bei Raumtemperatur rühren. 100ml von der Mischung werden in 2550 g Wasser eingerührt. Der pH wird auf 4,0 eingestellt und in dieser schwach essigsaure Lösung wird ein 330 g schweres Polyestergewebe (Trevira mit einem Flächengewicht von ca. 220 g/m2) im Hochtemperaturverfahren ausgezogen, wobei mit einer Geschwindigkeit von 3°C pro Minute auf 120°C aufgeheizt wird, bei 30 Minuten bei 120°C hält und dann wieder mit 3°C pro Minute bis auf 40°C abkühlt. Die Flotte wird abgetrennt und das Textil wird kurz in kaltem Wasser gespült und anschließend für 3 Minuten bei 130°C auf dem Spannrahmen getrocknet.

Das Textil wird bei 40°C gewaschen, wobei nach 1, 3, 5, 10, 15, 20, 25 und 30 Waschzyklen getrocknet wird. Die Muster werden bei 40°C bis auf 30 Waschzyklen gewaschen und in Fünferschritten nach ASTM E 21-49 gegen Staphylococcus aureus 6538 geprüft. Die Muster zeigen bis zu 20 Waschzyklen eine sehr gute und bei 25 Waschzyklen immer noch eine für die Praxis genügende antibakterielle Wirkung.

### Beispiel 27:

2560 g Wasser werden in einem Becherglas vorgelegt. Dazu gibt man unter Rühren nacheinander 0,36 g L-Phenylalanin, 0,20 g Natriumacetat Trihydrat, 0,49 g 80%ige Essigsäure, 0,18 g Calciumchlorid, 0,09 g Aluminiumchlorid Hexahydrat.
Man lässt 5 Minuten bei Raumtemperatur rühren und gibt dann 2,0 g Sanitized T 99-19 zu. Diese Mischung lässt man für eine Stunde bei Raumtemperatur rühren. Der pH wird auf 4,0 eingestellt und in dieser schwach essigsaure Lösung wird ein 330 g schweres Polyestergewebe (Trevira mit einem Flächengewicht von ca. 220 g/m2) im Hochtemperaturverfahren ausgezogen, wobei mit einer Geschwindigkeit von 3°C pro Minute auf 120°C aufgeheizt wird, bei 30 Minuten bei 120°C hält und dann wieder mit 3°C pro Minute bis auf40°C abkühlt.

Die Flotte wird dann abgetrennt und das Textil wird kurz in kaltem Wasser gespült und anschließend für 3 Minuten bei 130°C auf dem Spannrahmen getrocknet. Das Textil wird bei 40°C gewaschen, wobei nach 1, 3, 5, 10, 15, 20, 25 und 30 Waschzyklen getrocknet wird.

Die Muster werden bei 40°C bis auf 30 Waschzyklen gewaschen und in Fünferschritten nach ASTM E 21-49 gegen Staphylococcus aureus 6538P geprüft. Die Muster zeigen bis zu 20 Waschzyklen eine sehr gute und bei 25 Waschzyklen eine genügende antibakterielle Wirkung mit einer Reduktion der Keimzahl von rund Faktor 100 gegenüber einem nicht ausgerüsteten Muster.

### Beispiel 28:

Ein 200 Laufmeter langes und 1,6 Meter breites antimonfreies, anthrazitfarbenes, reduktiv gereinigtes und gespültes Gewebe aus reinem Polyester mit einem Flächengewicht von 175 Gramm pro Quadratmeter, somit insgesamt 56 Kilogramm Textil werden in einen Jet (Maschine für technische Ausziehverfahren) eingezogen.

500 Liter Wasser werden zugegeben und eine Lösung von 1,08 Kilogramm 1-Phenylalanin in 50 Liter Wasser und 165 Gramm Ameisensäure werden zugegeben, der pH-Wert der Flotte beträgt 5. Fünf Minuten vorlaufen lassen und dann wird mit einer Aufheizrate von 2°C pro Minute auf 60°C aufgeheizt. 20 Minuten bei 60°C gelassen.

325 Gramm Sanitized T 99-19 in 10 Liter Wasser werden zugegeben und der Jet wird für weitere 20 Minuten bei 60°C laufen gelassen. 1,7 Kilogramm Bethamin AHP (Wachs / Fettsäurekondensationsprodukt von Dr. Th. Böhme KG Chemische Fabrik GmbH & Co., Isardamm 79-83, D-82538 Geretsried, ein universelles Weichgriffmittel, hydrophil mit ausgeprägten antistatischen Eigenschaften) zugegeben, weitere 15 Minuten bei 60°C laufen lassen. Mit 2°C pro Minute abgekühlt und die Flotte abgelassen, mit 150 Liter Wasser gespült, das Spülwasser abgelassen und das Textil auf dem Spannrahmen während 2 Minuten bei 120°C getrocknet.

Muster von diesem Textil werden nach der Norm EN ISO 6330 (6A) 40°C mit dem Farbechtheitswaschmittel nach der Norm ECE 77 gewaschen. Nach 30, 40 und 50 Waschzyklen wird die Keimreduktion mit der Methode nach ASTM E 21-96 gegen Staphylococcus aureus ATCC 6538 geprüft. Die Ergebnisse sind eine Keimreduktion bei allen Prüfpunkten von 1,6 bis 1,7 Einheiten nach dem dekadischen Logarithmus entsprechend einer Überlebensrate von 2 bis 3 Prozent der Prüfkeime.

### Beispiel 29:

In einer Versuchsausrüstung werden 14 Kilogramm eines orange gefärbten Trikots aus Polyester/Polyamid/Elastan bei 60°C vorgewaschen, dann werden 280 Gramm 1-Phenylalanin und 110 Liter Wasser zugegeben. 10 Minuten vorlaufen lassen, mit 3°C pro Minute auf 60°C aufgeheizt und 15 Minuten bei 60°C laufen gelassen. 80 Gramm Sanitized T 99-19 in 2 Liter Wasser werden zugegeben und weitere 30 Minuten bei 60°C laufen gelassen. Die Flotte wird auf 35°C abgekühlt und dann abgelassen. 40 Liter Wasser zum Spülen werden zugegeben, zwei Minuten laufen gelassen und das Spülwasser wird abgelassen. Das Textil wird über Abpresswalzen ausgetragen und auf einem Spannrahmen bei 120°C getrocknet. Ein Muster erreicht nach 50 Waschzyklen nach EN ISO 6330 (6A), gewaschen mit dem Farbechtheitswaschmittel nach ECE 77, eine Keimzahlreduktion von Faktor 100 (log Reduktion = 2,0) gegenüber dem Inokulum.

## Patentansprüche

1. Verfahren zur antimikrobiellen Ausrüstung von Textilien oder Fasern, die im Wesentlichen aus synthetischen Materialien bestehen, bei dem auf die Textilien oder Fasern eine wässrige Lösung einer organischen Primer-Komponente (P), welche die Hydrophobie der Oberfläche der Textilien oder Fasern vergrößert, und als antimikrobiellen Komponente (K) mindestens eine organische quaternäre Ammoniumverbindung der allgemeinen Formel (I) 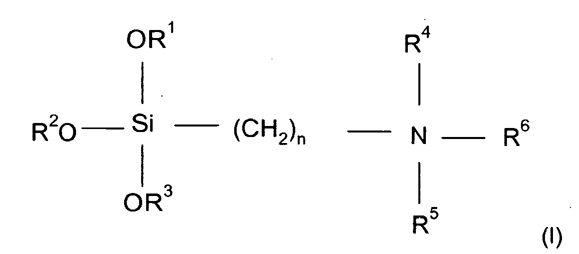 wobei die Reste unabhängig voneinander folgende Bedeutungen haben,
R¹ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R² bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R³ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R⁴ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁵ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁶ bedeutet einen verzweigten oder nicht verzweigten Alkylrest mit 8 bis 18 C-Atomen;
n bedeutet eine ganze Zahl von 1 bis 6,
und
wobei die Primer-Komponente (P) aus einer oder mehreren der folgenden Verbindungen besteht: aromatische Mono- oder Dicarbonsäuren, wobei diese auch durch Hydroxy-Gruppen substituiert sein können; aromatische Mono- und Diamine; aromatische Mono- oder Dialkohole; aliphatische Mono- oder Dicarbonsäure mit 6 bis 26 C-Atomen, wobei diese auch durch Hydroxy- oder Amino-Gruppen substituiert sein können; aliphatische, primäre, sekundäre und tertiäre Amine mit 6 bis 26 C-Atomen; aliphatische, primäre oder sekundäre Alkohole mit 6 bis 26 C-Atomen; aliphatische, primäre Mercaptane mit 6 bis 26 C-Atomen; Aminosäuren,
sowie ein Lösungsmittel (L) gleichzeitig oder zeitlich versetzt auf die Textilien oder Fasern aufgebracht werden.

2. Verfahren gemäß Patentanspruch 1, **dadurch gekennzeichnet, dass** eine Behandlung der Textilien oder Fasern mit einer wässrigen Lösung einer organischen Primer-Komponente (P) erfolgt, die ggf. zusätzlich weitere Hilfskomponenten enthält, und ohne zwischenzeitlichen Trocknungsschritt, eine Behandlung der Textilien oder Fasern mit einer die antimikrobielle Komponente (K) enthaltenden wässrigen Lösung erfolgt.

3. Verfahren gemäß Patentanspruch 1 oder 2, **dadurch gekennzeichnet, dass** zunächst ein Verfahrensschritt a) der Vorbchandlung der Textilien oder Fasern mit einer wässrigcn Lösung einer organischen Primer-Komponente (P) erfolgt, anschließend ein thermischer Trocknungsschritt b) erfolgt, und nachfolgend in einem weiteren Verfahrensschritt c) eine Behandlung der Textilien oder Fasern mit einer wässrigen Lösung der antimikrobiellen Komponente (K) erfolgt.

4. Verfahren gemäß einem der Ansprüche 1 bis 3, **dadurch gekennzeichnet, dass** die mit einer wässrigen Lösung einer organischen Primer-Komponente (P) behandelten Textilien oder Fasern mindestens einem Trocknungsschritt unterzogen werden, wobei eine Temperatur von mindestens 100° C angewendet wird.

5. Verfahren gemäß einem der Ansprüche 1 bis 4, **dadurch gekennzeichnet, dass** eine antimikrobielle Komponente (K) und zusätzlich eine Metallsalz-Komponente (M) sowie ein Lösungsmittel (L) verwendet werden, wobei die Metallsalz-Komponente (M) mindestens ein Salz eines zwei- bis fünfwertigen Metalls enthält.

6. Verfahren gemäß einem der Ansprüche 1 bis 5, **dadurch gekennzeichnet, dass** eine antimikrobielle Komponente (K) der allgemeinen Formel (I) eingesetzt wird, wobei die Reste unabhängig voneinander folgende Bedeutungen haben:
R¹ bedeutet einen Alkylrest mit 1 bis 6 C-Atomen, wobei der Alkylrest auch substituiert sein kann durch eine Gruppe H-((CH₂)ₘ-O)_{q} , wobei m eine ganze Zahl von 1 bis 3 sein kann und q eine ganze Zahl von 1 bis 4 ist;
R² bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R³ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest, einen Pyridinrest, einen Pyrimidinrest, einen Pyrazinrest,
einen Pyridazinrest, einen Pyrrolrest oder einen Imidazolrest bedeutet;
R⁵ einen Alkylrest mit 1 bis 18 C-Atomen, einen Cyclo-alkylrest mit 3 bis 7 C-Atomen, einen Phenylrest, einen Benzylrest, einen Pyridinrest, einen Pyrimidinrest,
einen Pyrazinrest, einen Pyridazinrest, einen Pyrrolrest oder einen Imidazolrest bedeutet;
R⁶ einen Alkylrest mit 8 bis 18 C-Atomen;
und n eine ganze Zahl von 1 bis 4 bedeutet.

7. Verfahren gemäß einem der Ansprüche 1 bis 6, **dadurch gekennzeichnet, dass** eine antimikrobielle Komponente (K) der allgemeinen Formel (I) verwendet wird, wobei die Reste unabhängig voneinander folgende Bedeutungen haben:
R¹, R², R³ bedeuten jeweils einen Alkylrest mit 1 bis 6 C-Atomen, wobei der Alkylrest auch substituiert sein kann durch eine Gruppe H-((CH₂)ₘ-O)_{q} , wobei m eine ganze Zahl von 1 bis 3 sein kann und q eine ganze Zahl von 1 bis 4 ist;
R⁴ bedeutet einen Alkylrest mit 1 bis 18 C-Atomen, einen Phenylrest oder einen Benzylrest,
R⁵ einen Alkylrest mit 1 bis 18 C-Atomen bedeutet;
R⁶ einen Alkylrest mit 8 bis 18 C-Atomen bedeutet;
und n eine ganze Zahl von 2 bis 4 bedeutet.

8. Verfahren gemäß einem der Ansprüche 1 bis 7, **dadurch gekennzeichnet, dass** eine antimikrobielle Komponente (K) der allgemeinen Formel (I) verwendet wird, wobei die Reste unabhängig voneinander folgende Bedeutungen haben
R¹, R² und R³ gleich sind und einen verzweigten oder nicht verzweigten Alkylrest mit 1 bis 4 C-Atomen bedeuten,
n eine ganze Zahl von 1 bis 4 ist
R⁴ gleich Methyl ist,
R⁵ gleich Alkyl mit 1 bis 12 C-Atomen ist, und
R⁶ gleich Alkyl mit 8 bis 18 C-Atomen ist.

9. Verfahren gemäß einem der Ansprüche 1 bis 8, **dadurch gekennzeichnet, dass** eine antimikrobielle Komponente (K) und zusätzlich eine Metallsalz-Komponente (M) verwendet werden, wobei diese Metallsalz-Komponente (M) mindestens ein Salz eines zweiwertigen, dreiwertigen oder vierwertigen Metalls enthält.

10. Verfahren gemäß einem der Ansprüche 1 bis 9, **dadurch gekennzeichnet, dass** eine antimikrobielle Komponente (K) und zusätzlich eine Metallsalz-Komponente (M) verwendet werden, wobei diese Metallsalz-Komponente (M) mindestens ein Salz eines zweiwertigen, dreiwertigen oder vierwertigen Metalls aus der Gruppe Mg, Ca, Ba, Zn, Sn; Al, Ga, Fe; und Ti enthält.

11. Verfahren gemäß einem der Ansprüche 1 bis 10, **dadurch gekennzeichnet, dass** eine antimikrobielle Komponente (K) und zusätzlich eine Metallsalz-Komponente (M) verwendet werden, wobei diese Metallsalz-Komponente (M) mindestens ein Salz eines zweiwertigen Metalls aus der Gruppe Mg, Ca, Ba, Zn und/oder ein Salz eines dreiwertigen Metalls aus der Gruppe Al und Fe enthält.

12. Verfahren gemäß einem der Ansprüche 1 bis 11, **dadurch gekennzeichnet, dass** eine antimikrobielle Komponente (K) verwendet wird, die ein Dimethyl-tetradecyl-(3-(trimethoxysilyl)-propyl)-ammonium-Salz oder ein Dimethyl-octadecyl-(3-(trimethoxysilyl)-propyl)-ammonium-Salz enthält, und zusätzlich eine Metallsalz-Komponente (M) verwendet wird, die ein Salz eines zweiwertigen Metalls aus der Gruppe Mg, Ca, Zn, Ba und/oder ein Salz eines dreiwertigen Metalls aus der Gruppe Al und Fe enthält.

13. Verfahren gemäß einem der Ansprüche 1 bis 12, **dadurch gekennzeichnet, dass** eine wässrige Lösung einer organischen Primer-Komponente (P) verwendet wird, wobei diese Lösung von 0,01 bis 15 Gew.-% der Primer-Komponente (P) enthält.

14. Verfahren gemäß einem der Ansprüche 1 bis 13, **dadurch gekennzeichnet, dass** eine wässrigen Lösung einer antimikrobielle Komponente (K) verwendet wird, wobei diese Lösung von 0,01 bis 10 Gew.-% der antimikrobiellen Komponente (K) enthält.

15. Verfahren gemäß einem der Ansprüche 1 bis 14, **dadurch gekennzeichnet, dass** eine wässrigen Lösung einer antimikrobielle Komponente (K) verwendet wird, wobei diese Lösung zusätzlich von 0,01 bis 10 Gew.% einer Metallsalzkomponente (M) enthält.

16. Verfahren gemäß einem der Ansprüche 1 bis 15, **dadurch gekennzeichnet, dass** eine Zusammensetzung eingesetzt wird, die 0,01 bis 10 Gew.-% der Primer-Komponente (P), 70 bis 99,9 Gew.-% des Lösungsmittels Wasser sowie 0,01 bis 10 Gew.-% einer antimikrobiellen Komponente (K) enthält.

17. Verfahren gemäß einem der Ansprüche 1 bis 16, **dadurch gekennzeichnet, dass** eine Zusammensetzung eingesetzt wird, die 0,3 bis 2,5 Gew.-% der antimikrobiellen Komponente (K), 70 bis 99,5 Gew.-% des Lösungsmittels Wasser sowie 0,1 bis 30 Gew.-% an Hilfskomponenten und enthält.

18. Zusammensetzung für die Ausrüstung von Textilien oder Fasern, enthaltend 0,01 bis 20 Gew.-% einer Primer-Komponente (P), welche die Hydrophobie der Oberfläche der Textilien oder Fasern vergrößert, 70 bis 99,5 Gew.-% des Lösungsmittels Wasser sowie 0,1 bis 30 Gew.-% an Hilfskomponenten, sowie 0,01 bis 10 Gew.-% einer organischen quaternären Ammoniumverbindung der allgemeinen Formel (I) 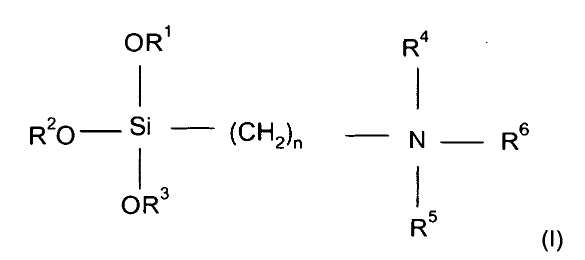 wobei die Reste unabhängig voneinander folgende Bedeutungen haben,
R¹ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R² bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R³ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R⁴ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁵ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁶ bedeutet einen verzweigten oder nicht verzweigten Alkylrest mit 8 bis 18 C-Atomen;
n bedeutet eine ganze Zahl von 1 bis 6.
und
wobei die Primer-Komponente (P) aus einer oder mehrerer der der folgenden Verbindungen besteht: aromatische Mono- und Dicarbonsäuren, wobei diese auch durch Hydroxy-Gruppen substituiert sein können; aromatische Mono- und Diamine; aromatischen Mono- und Dialkohole; aliphatische Mono- oder Dicarbonsäure mit 6 bis 26 C-Atomen, wobei diese auch durch Hydroxy- oder Amino-Gruppen substituiert sein können; aliphatische, primäre, sekundäre und tertiäre Amine mit 6 bis 26 C-Atomen; aliphatische, primäre und sekundäre Alkohole mit 6 bis 26 C-Atomen; aliphatische, primäre Mercaptane mit 6 bis 26 C-Atomen; Aminosäuren.

19. Zusammensetzung gemäß Ansprüch 18, **dadurch gekennzeichnet, dass** sie 0,01 bis 20 Gew.-% einer Primer-Komponente (P), 70 bis 95 Gew.-% des Lösungsmittels Wasser, 0,1 bis 30 Gew.-% an Hilfskomponenten, 0,01 bis 10 Gew.-% einer organischen quaternären Ammoniumverbindung der allgemeinen Formel (I) sowie von 0,01 bis 20 Gew.-%, einer Metallsalzkomponente (M) enthält.

20. Zusammensetzung gemäß einem der Ansprüche 18 oder 19, **dadurch gekennzeichnet, dass** sie 0,05 bis 15 Gew.-% einer Primer-Komponente (P) enthält, wobei die Primer-Komponente (P) aus einer oder mehrerer der der folgenden Verbindungen besteht: aromatische Mono- und Dicarbonsäuren, wobei diese auch durch Hydroxy-Gruppen substituiert sein können; aliphatische Monocarbonsäure mit 6 bis 26 C-Atomen; aliphatische, primäre Alkohole mit 6 bis 26 C-Atomen; primäre Amine mit 6 bis 26 C-Atomen; natürliche Aminosäuren.

21. Zusammensetzung gemäß einem der Ansprüche 18 bis 20, **dadurch gekennzeichnet, dass** sie neben dem Lösungsmittel Wasser zum einen 0,05 bis 15 Gew.-% einer der folgenden Primer-Komponenten (P) enthält: aromatische Mono- und Dicarbonsäuren, wobei diese auch durch Hydroxy-Gruppen substituiert sein können; aliphatische Monocarbonsäure mit 6 bis 26 C-Atomen; aliphatische, primäre Alkohole mit 6 bis 26 C-Atomcn; primäre Amine mit 6 bis 26 C-Atomen; natürliche Aminosäuren; und dass sie zum anderen 0,01 bis 10 Gew.-% an Dimethyl-tetradecyl-(3-(trimethoxysilyl)-propyl)-ammonium-Salz oder Dimethyl-octadecyl-(3-(trimethoxysilyl)-propyl)-ammonium-Salz enthält.

22. Verwendung einer Zusammensetzung gemäß einem der Patentansprüche 18 bis 21 zur Behandlung von Textilien, Fasern und Garnen, die im Wesentlichen aus synthetischen Materialien bestehen, für eine antimikrobielle Ausrüstung.

23. Verwendung gemäß Patentanspruch 22 zur Ausrüstung von Textilien, Fasern und Garnen, die im Wesentlichen aus Polyamid und/oder Polyester bestehen.

24. Verwendung gemäß einem der Patentansprüche 22 oder 23 zur antimikrobiellen Ausrüstung von Textilien, Fasern und Garnen mittels Foulardverfahren, Schaumauftrag, Sprühverfahren, Beschichtung oder Auszugsmethode.

25. Textilien, Fasern und Garne, die antimikrobiell ausgerüstet wurden mittels eines Verfahrens gemäß einem der Patentansprüche 1 bis 17.

## Claims

1. Method for the antimicrobial finishing of textiles or fibers which consist essentially of synthetic materials, in which an aqueous solution of an organic primer component (P), which increases the hydrophobicity of the surface of the textiles or fibers, and, as antimicrobial component (K), at least one organic quaternary ammonium compound of the general formula (I) 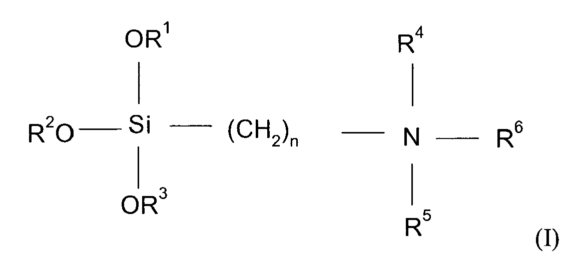 where the radicals, independently of one another, have the following meanings,
R¹ is a branched or unbranched alkyl radical having 1 to 12 carbon atoms, where the alkyl radical may also be substituted by a group H-((CH₂)ₘ-O)_{q}, where m can be an integer from 0 to 4 and q is an integer from 1 to 6;
R² is a branched or unbranched alkyl radical having 1 to 12 carbon atoms, where the alkyl radical may also be substituted by a group H-((CH₂)ₘ-O)_{q}, where m may be an integer from 0 to 4 and q is an integer from 1 to 6;
R³ is a branched or unbranched alkyl radical having 1 to 12 carbon atoms, where the alkyl radical may also be substituted by a group H-((CH₂)ₘ-O)_{q}, where m may be an integer from 0 to 4 and q is an integer from 1 to 6;
R⁴ is a branched or unbranched alkyl radical having 1 to 18 carbon atoms, a cycloalkyl radical having 3 to 7 carbon atoms, a phenyl radical, a benzyl radical optionally substituted by one or two halogen atoms or a heteroaryl radical;
R⁵ is a branched or unbranched alkyl radical having 1 to 18 carbon atoms, a cycloalkyl radical having 3 to 7 carbon atoms, a phenyl radical, a benzyl radical optionally substituted by one or two halogen atoms or a heteroaryl radical;
R⁶ is a branched or unbranched alkyl radical having 8 to 18 carbon atoms; n is an integer from 1 to 6,
and
where the primer component (P) consists of one or more of the following compounds: aromatic mono- or dicarboxylic acids, where these may also be substituted by hydroxy groups; aromatic mono- and diamines; aromatic mono- or dialcohols; aliphatic mono- or dicarboxylic acid having 6 to 26 carbon atoms, where these may also be substituted by hydroxy or amino groups; aliphatic, primary, secondary or tertiary amines having 6 to 26 carbon atoms; aliphatic, primary or secondary alcohols having 6 to 26 carbon atoms; aliphatic, primary mercaptans having 6 to 26 carbon atoms; amino acids,
and a solvent (L) are applied to the textiles or fibers at the same time or at a different time.

2. Method according to Claim 1, **characterized in that** a treatment of the textiles or fibers takes place with an aqueous solution of an organic primer component (P) which if appropriate additionally comprises further auxiliary components, and without interim drying step, a treatment of the textiles or fibers with an aqueous solution comprising the antimicrobial component (K) takes place.

3. Method according to Claim 1 or 2, **characterized in that** firstly a process step a) of the pretreatment of the textiles or fibers with an aqueous solution of an organic primer component (P) takes place, then a thermal drying step b) takes place, and subsequently, in a further process step c), a treatment of the textiles or fibers with an aqueous solution of the antimicrobial component (K) takes place.

4. Method according to any one of Claims 1 to 3, **characterized in that** the textiles or fibers treated with an aqueous solution of an organic primer component (P) are subjected to at least one drying step, where a temperature of at least 100°C is used.

5. Method according to any one of Claims 1 to 4, **characterized in that** an antimicrobial component (K) and additionally a metal salt component (M) and also a solvent (L) are used, where the metal salt component (M) comprises at least one salt of a di- to pentavalent metal.

6. Method according to any one of Claims 1 to 5, **characterized in that** an antimicrobial component (K) of the general formula (I) is used, where the radicals, independently of one another, have the following meanings:
R¹ is an alkyl radical having 1 to 6 carbon atoms, where the alkyl radical may also be substituted by a group H-((CH₂)ₘ-O)_{q}, where m may be an integer from 1 to 3 and q is an integer from 1 to 4;
R² is an alkyl radical having 1 to 6 carbon atoms, where the alkyl radical may also be substituted by a group H-((CH₂)ₘ-O)_{q}, where m may be an integer from 1 to 3 and q is an integer from 1 to 4;
R³ is an alkyl radical having 1 to 6 carbon atoms, where the alkyl radical may also be substituted by a group H-((CH₂)ₘ-O)_{q}, where m may be an integer from 1 to 3 and q is an integer from 1 to 4;
R⁴ is an alkyl radical having 1 to 18 carbon atoms, a cycloalkyl radical having 3 to 7 carbon atoms, a phenyl radical, a benzyl radical optionally substituted by one or two halogen atoms, a pyridine radical, a pyrimidine radical, a pyrazine radical, a pyridazine radical, a pyrrole radical or an imidazole radical;
R⁵ is an alkyl radical having 1 to 18 carbon atoms, a cycloalkyl radical having 3 to 7 carbon atoms, a phenyl radical, a benzyl radical, a pyridine radical, a pyrimidine radical, a pyrazine radical, a pyridazine radical, a pyrrole radical or an imidazole radical;
R⁶ is an alkyl radical having 8 to 18 carbon atoms;
and n is an integer from 1 to 4.

7. Method according to any one of Claims 1 to 6, **characterized in that** an antimicrobial component (K) of the general formula (I) is used, where the radicals, independently of one another, have the following meanings:
R¹, R², R³ are in each case an alkyl radical having 1 to 6 carbon atoms, where the alkyl radical may also be substituted by a group H-((CH₂)ₘ-O)_{q}, where m may be an integer from 1 to 3 and q is an integer from 1 to 4;
R⁴ is an alkyl radical having 1 to 18 carbon atoms, a phenyl radical or a benzyl radical,
R⁵ is an alkyl radical having 1 to 18 carbon atoms;
R⁶ is an alkyl radical having 8 to 18 carbon atoms;
and n is an integer from 2 to 4.

8. Method according to any one of Claims 1 to 7, **characterized in that** an antimicrobial component (K) of the general formula (I) is used, where the radicals, independently of one another, have the following meanings
R¹, R² and R³ are identical and are a branched or unbranched alkyl radical having 1 to 4 carbon atoms,
n is an integer from 1 to 4
R⁴ is methyl,
R⁵ is alkyl having 1 to 12 carbon atoms, and
R⁶ is alkyl having 8 to 18 carbon atoms.

9. Method according to any one of Claims 1 to 8, **characterized in that** an antimicrobial component (K) and additionally a metal salt component (M) are used, where this metal salt component (M) comprises at least one salt of a divalent, trivalent or tetravalent metal.

10. Method according to any one of Claims 1 to 9, **characterized in that** an antimicrobial component (K) and additionally a metal salt component (M) are used, where this metal salt component (M) comprises at least one salt of a divalent, trivalent or tetravalent metal from the group Mg, Ca, Ba, Zn, Sn; Al, Ga, Fe; and Ti.

11. Method according to any one of Claims 1 to 10, **characterized in that** an antimicrobial component (K) and additionally a metal salt component (M) are used, where this metal salt component (M) comprises at least one salt of a divalent metal from the group Mg, Ca, Ba, Zn and/or a salt of a trivalent metal from the group Al and Fe.

12. Method according to any one of Claims 1 to 11, **characterized in that** an antimicrobial component (K) is used which comprises a dimethyltetradecyl(3-(trimethoxysilyl)propyl)ammonium salt or a dimethyloctadecyl(3-(trimethoxysilyl)propyl)ammonium salt, and additionally a metal salt component (M) is used which comprises a salt of a divalent metal from the group Mg, Ca, Zn, Ba and/or a salt of a trivalent metal from the group Al and Fe.

13. Method according to any one of Claims 1 to 12, **characterized in that** an aqueous solution of an organic primer component (P) is used, where this solution comprises from 0.01 to 15% by weight of the primer component (P).

14. Method according to any one of Claims 1 to 13, **characterized in that** an aqueous solution of an antimicrobial component (K) is used, where this solution comprises from 0.01 to 10% by weight of the antimicrobial component (K).

15. Method according to any one of Claims 1 to 14, **characterized in that** an aqueous solution of an antimicrobial component (K) is used, where this solution additionally comprises from 0.01 to 10% by weight of a metal salt component (M).

16. Method according to any one of Claims 1 to 15, **characterized in that** a composition is used which comprises 0.01 to 10% by weight of the primer component (P), 70 to 99.9% by weight of the solvent water, and 0.01 to 10% by weight of an antimicrobial component (K).

17. Method according to any one of Claims 1 to 16, **characterized in that** a composition is used which comprises 0.3 to 2.5% by weight of the antimicrobial component (K), 70 to 99.5% by weight of the solvent water, and 0.1 to 30% by weight of auxiliary components.

18. Composition for the finishing of textiles or fibers, comprising 0.01 to 20% by weight of a primer component (P), which increases the hydrophobicity of the surface of the textiles or fibers, 70 to 99.5% by weight of the solvent water, and 0.1 to 30% by weight of auxiliary components, and 0.01 to 10% by weight of an organic quaternary ammonium compound of the general formula (I) 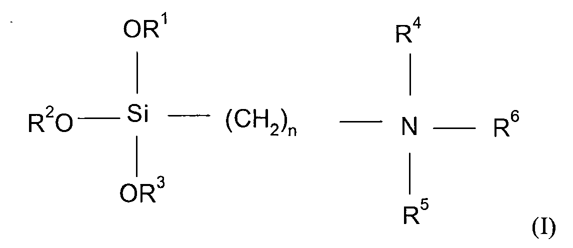 where the radicals, independently of one another, have the following meanings,
R¹ is a branched or unbranched alkyl radical having 1 to 12 carbon atoms, where the alkyl radical may also be substituted by a group H-((CH₂)ₘ-O)_{q}, where m may be an integer from 0 to 4 and q is an integer from 1 to 6;
R² is a branched or unbranched alkyl radical having 1 to 12 carbon atoms, where the alkyl radical may also be substituted by a group H-((CH₂)ₘ-O)_{q}, where m may be an integer from 0 to 4 and q is an integer from 1 to 6;
R³ is a branched or unbranched alkyl radical having 1 to 12 carbon atoms, where the alkyl radical may also be substituted by a group H-((CH₂)ₘ-O)_{q}, where m may be an integer from 0 to 4 and q is an integer from 1 to 6;
R⁴ is a branched or unbranched alkyl radical having 1 to 18 carbon atoms, a cycloalkyl radical having 3 to 7 carbon atoms, a phenyl radical, a benzyl radical optionally substituted by one or two halogen atoms or a heteroaryl radical;
R⁵ is a branched or unbranched alkyl radical having 1 to 18 carbon atoms, a cycloalkyl radical having 3 to 7 carbon atoms, a phenyl radical, a benzyl radical optionally substituted by one or two halogen atoms or a heteroaryl radical;
R⁶ is a branched or unbranched alkyl radical having 8 to 18 carbon atoms;
n is an integer from 1 to 6,
and
where the primer component (P) consists of one or more of the following compounds: aromatic mono- and dicarboxylic acids, where these may also be substituted by hydroxy groups; aromatic mono- and diamines; aromatic mono- and dialcohols; aliphatic mono- or dicarboxylic acid having 6 to 26 carbon atoms, where these may also be substituted by hydroxy or amino groups; aliphatic, primary secondary and tertiary amines having 6 to 26 carbon atoms; aliphatic, primary and secondary alcohols having 6 to 26 carbon atoms; aliphatic, primary mercaptans having 6 to 26 carbon atoms;
amino acids.

19. Composition according to Claim 18, **characterized in that** it comprises 0.01 to 20% by weight of a primer component (P), 70 to 95% by weight of the solvent water, 0.1 to 30% by weight of auxiliary components, 0.01 to 10% by weight of an organic quaternary ammonium compound of the general formula (I), and from 0.01 to 20% by weight of a metal salt component (M).

20. Composition according to either of Claims 18 and 19, **characterized in that** it comprises 0.05 to 15% by weight of a primer component (P), where the primer component (P) consists of one or more of the following compounds: aromatic mono- and dicarboxylic acids, where these may also be substituted by hydroxy groups; aliphatic monocarboxylic acid having 6 to 26 carbon atoms; aliphatic, primary alcohols having 6 to 26 carbon atoms; primary amines having 6 to 26 carbon atoms; natural amino acids

21. Composition according to any one of Claims 18 to 20, **characterized in that**, besides the solvent water, it comprises firstly 0.05 to 15% by weight of one of the following primer components (P): aromatic mono- and dicarboxylic acids, where these may also be substituted by hydroxy groups; aliphatic monocarboxylic acid having 6 to 26 carbon atoms; aliphatic, primary alcohols having 6 to 26 carbon atoms; primary amines having 6 to 26 carbon atoms; natural amino acids; and that it comprises secondly 0.01 to 10% by weight of dimethyltetradecyl(3-(trimethoxysilyl)propyl)ammonium salt or dimethyloctadecyl(3-(trimethoxysilyl)propyl)ammonium salt.

22. Use of a composition according to any one of Claims 18 to 21 for the treatment of textiles, fibers and yarns which consist essentially of synthetic materials for an antimicrobial finishing.

23. Use according to Claim 22 for the finishing of textiles, fibers and yarns which consist essentially of polyamide and/or polyester.

24. Use according to either of Claims 22 and 23 for the antimicrobial finishing of textiles, fibers and yarns by means of padding processes, foam application, spray processes, coating or extraction method.

25. Textiles, fibers and yarns which have been antimicrobially finished by means of a method according to any one of Claims 1 to 17.

## Revendications

1. Procédé pour le traitement antimicrobien de matériaux textiles ou de fibres consistant essentiellement en fibres synthétiques, dans lequel sur les matériaux textiles ou ibres, est appliquée une solution aqueuse d'un composant organique d'apprêt (P), qui augmente le caractère hydrophobe de la surface des matériaux textiles ou des fibres et est appliqué comme composant antimicrobien (K) au moins un composé organique d'ammonium quaternaire de formule générale (I) 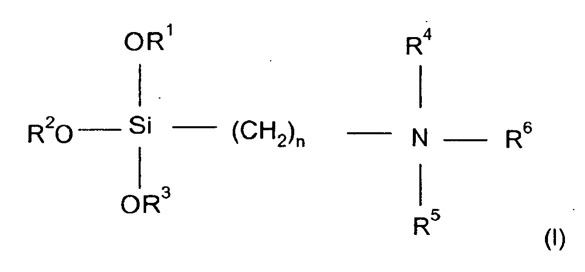 dans laquelle les substituants, indépendamment les uns des autres ont les significations suivantes:
- R¹ est un radical alkyle, ramifié ou non ramifié, comportant 1 à 12 atomes de carbone, dans lequel le radical alkyle peut également être substitué par un groupe H-[(CH₂)ₘO)_{q} dans lequel m peut être un nombre entier de 0 à 4 et q est un nombre entier de 1 à 6;
- R² est un radical alkyle, ramifié ou non ramifié, comportant 1 à 12 atomes de carbone, dans lequel le radical alkyle peut également être substitué par un groupe H-[(CH₂) ₘO)_{q} dans lequel m peut être un nombre entier de 0 à 4 et q est un nombre entier de 1 à 6;
- R³ est un radical alkyle, ramifié ou non ramifié, comportant 1 à 12 atomes de carbone, dans lequel le radical alkyle peut également être substitué par un groupe H-[(CH₂) ₘO)_{q} dans lequel m peut être un nombre entier de 0 à 4 et q est un nombre entier de 1 à 6;
- R⁴ est un radical alkyle, ramifié ou non ramifié, comportant 1 à 18 atomes de carbone,, un radical cycloalkyle comportant 3 à 7 atomes de carbone, un radical phényle, un radical benzyle éventuellement substitué par un ou deux atomes d'halogène ou un groupe hétéroaryle;
- R⁵ est un radical alkyle, ramifié ou non ramifié, comportant 1 à 18 atomes de carbone, un radical cycloalkyle comportant 3 à 7 atomes de carbone, un radical phényle, un radical benzyle éventuellement substitué par un ou deux atomes d'halogène ou un groupe hétéroaryle;
- R⁶ est un radical alkyle, ramifié ou non ramifié, comportant 8 à 18 atomes de carbone;
- n est un nombre entier de 1 à 6,
et ledit composant d'apprêt organique (P), consiste en un ou plusieurs des composés suivants:
- les acides monocarboxyliques ou dicarboxyliques aromatiques, lesquels peuvent être substitués par des radicaux hydroxy,
- les monoamines et diamines aromatiques,
- les monoalcools ou dialcools aromatiques,
- les acides monocarboxyliques ou dicarboxyliques aliphatiques comportant de 6 à 26 atomes de carbone, qui peuvent également être substitués par des groupes hydroxyles ou amino;
- les amines primaires, secondaires et tertiaires aliphatiques comportant de 6 à 26 atomes de carbone,
- les alcools primaires ou secondaires comportant de 6 à 26 atomes de carbone,
- les mercaptans primaires aliphatiques, comportant de 6 à 26 atomes de carbone;
- les acides aminés.
ainsi qu'un solvant (L) peut être appliqué sur le textile ou les fibres, simultanément ou de façon séquentielle,

2. Procédé selon la revendication 1, **caractérisé en ce que** les fibres ou les matériaux textiles sont traitées par une solution aqueuse d'un composant d'apprêt organique (P) qui contient en outre éventuellement d'autres composants auxiliaires, puis, sans étape de séchage intermédiaire, les fibres ou matériaux textiles sont traitées par une solution aqueuse contenant le composant antimicrobien (K).

3. Procédé selon la revendication 1 ou 2, **caractérisé en ce qu'**il comporte tout d'abord
- une étape a) consistant en le prétraitement des matériaux textiles ou des fibres par une solution aqueuse d'un composant d'apprêt organique (P),
- suivie d'une étape b) de séchage thermique,
- et ensuite une étape c) ultérieure de traitement des fibres ou des matériaux textiles par une solution aqueuse du composant antimicrobien (K).

4. Procédé selon l'une quelconque des revendications 1 à 3, **caractérisé en ce que** les matériaux textiles ou les fibres traités par la solution aqueuse d'un composant d'apprêt organique (P) sont soumis à au moins une étape de séchage, dans laquelle on utilise une température d'au moins 100°C.

5. Procédé selon l'une quelconque des revendications 1 à 4, **caractérisé en ce que** sont utilisés un composant antimicrobien (K) et en outre un composant de sel métallique (M) ainsi qu'un solvant (L), le composant de sel métallique (M) consistant en au moins un sel d'un métal pouvant être divalent à pentavalent.

6. Procédé selon l'une quelconque des revendications 1 à 5, **caractérisé en ce qu'**est utilisé un composant antimicrobien (K) présentant la formule générale (I), dans laquelle; indépendamment les uns des autres, les substituants ont les significations suivantes:
- R¹ est un radical alkyle comportant 1 à 6 atomes de carbone, dans lequel le radical alkyle peut également être substitué par un groupe H-[(CH₂) ₘO)_{q} dans lequel m peut être un nombre entier de 1 à 3 et q est un nombre entier de 1 à 4;
- R² est un radical alkyle comportant 1 à 6 atomes de carbone, dans lequel le radical alkyle peut également être substitué par un groupe H-[(CH₂) ₘO)_{q} dans lequel m peut être un nombre entier de 1 à 3 et q est un nombre entier de 1 à 4;
- R³ est un radical alkyle comportant 1 à 6 atomes de carbone, dans lequel le radical alkyle peut également être substitué par un groupe H-[(CH₂) ₘO)_{q} dans lequel m peut être un nombre entier de 1 à 3 et q est un nombre entier de 1 à 4;
- R⁴ est un radical alkyle comportant 1 à 18 atomes de carbone, un radical cycloalkyle comportant 3 à 7 atomes de carbone, un radical phényle, un radical benzyle éventuellement substitué par 1 ou 2 atomes d'halogène, un radical pyridine, un radical pyrimidine,; un radical pyrazine, un radical pyridazine, un radical pyrrole ou un radical imidazole ;
- R⁵ est un radical alkyle comportant 1 à 18 atomes de carbone, un radical cycloalkyle comportant 3 à 7 atomes de carbone, un radical phényle, un radical benzyle; un radical pyrimidine, un radical pyrazine, un radical pyridazine, un radical pyrrole ou un radical imidazole ;
- R⁶ est un radical alkyle comportant 8 à 18 atomes de carbone;
- n est un nombre entier de 1 à 4.

7. Procédé selon l'une quelconque des revendications 1 à 6, **caractérisé en ce qu'**est utilisé un composant antimicrobien (K) présentant la formule générale (I), dans lequel; indépendamment les uns des autres, les substituants ont les significations suivantes:
- R¹ R² R³ sont respectivement des radicaux alkyles comportant 1 à 6 atomes de carbone, dans lequel le radical alkyle peut également être substitué par un radical H-[(CH₂) ₘO)_{q} dans lequel m peut être un nombre entier de 1 à 3 et q est un nombre entier de 1 à 4;
- R⁴ est un radical alkyle comportant 1 à 18 atomes de carbone, un radical phényle ou un radical benzyle
- R⁵ est un radical alkyle comportant 1 à 18 atomes de carbone,
- R⁶ est un radical alkyle comportant 8 à 18 atomes de carbone;
- Et n est un nombre entier de 2 à 4.

8. Procédé selon l'une quelconque des revendications 1 à 7, **caractérisé en ce qu'** est utilisé un composant antimicrobien (K) présentant la formule générale (I), dans laquelle les substituants, indépendamment les uns des autres, ont les significations suivantes:
- R¹ R² R³ sont semblables et consistent en des radicaux alkyles ramifiés ou non ramifiés, comportant 1 à 4 atomes de carbone
- n est un nombre entier de 1 à 4,
- R⁴ est le même radical méthyle,
- R⁵ est le même radical alkyle comportant 1 à 12 atomes de carbone,
- R⁶ est le même radical alkyle comportant 8 à 18 atomes de carbone;

9. Procédé selon l'une quelconque des revendications 1 à 8, **caractérisé en ce que** sont utilisés un composant antimicrobien (K) et en outre un composant de sel métallique (M), ledit composant de sel métallique (M) consistant au moins un sel d'un métal divalent, trivalent ou tétravalent.

10. Procédé selon l'une quelconque des revendications 1 à 9, **caractérisé en ce que** sont utilisés un composant antimicrobien (K) et en outre un composant de sel métallique (M), ledit composant de sel métallique (M) étant au moins un sel d'un métal divalent, trivalent ou tétravalent choisi dans le groupe consistant en Mg, Ca, Ba, Zn, Sn, Al, Ga, Fe et Ti.

11. Procédé selon l'une quelconque des revendications 1 à 10, **caractérisé en ce que** sont utilisés un composant antimicrobien (K) et en outre un composant de sel métallique (M), ledit composant de sel métallique (M) étant au moins un sel d'un métal divalent choisi dans le groupe consistant en Mg, Ca, Ba, Zn et/ou un sel d'un métal trivalent choisi dans le groupe consistant en Al1 ou Fe.

12. Procédé selon l'une quelconque des revendications 1 à 11, **caractérisé en ce que** sont utilisés un composant antimicrobien (K) contenant un sel d'ammonium de diméthyl-tétradécyl-[3 - (triméthoxysilyl)-propyl] ou un sel d'ammonium de diméthyl-octadécyl-[3-(triméthoxysilyl)-propyl, et en outre un composant d'un sel métallique (M) contenant un sel d'un métal bivalent (M) consistant en un sel d'un métal choisi dans le groupe consistant en Mg, Ca, Ba, Zn et / ou un sel d'un métal trivalent consistant en Al ou Fe.

13. Procédé selon l'une quelconque des revendications 1 à 12, **caractérisé en ce qu'**est utilisée une solution aqueuse d'un composant organique d'apprêt (P), ladite solution contenant de 0,01 à 15% en poids du composant d'apprêt (P).

14. Procédé selon l'une quelconque des revendications 1 à 13, **caractérisé en ce qu'**est utilisée une solution aqueuse d'un composant antimicrobien (K), ladite solution contenant de 0,01 à 10% en poids du composant antimicrobien (K).

15. Procédé selon l'une quelconque des revendications 1 à 14, **caractérisé en ce qu'**est utilisée une solution aqueuse d'un composant antimicrobien (K), ladite solution contenant en outre de 0,01 à 10% en poids d'un composant consistant en un sel métallique (M).

16. Procédé selon l'une quelconque des revendications 1 à 15, **caractérisé en ce qu'**on utilise une composition qui contient de 0,01 à 10% en poids du composant d'apprêt (P), de 70 à 99,9% en poids du solvant aqueux et de 0,01 % à 10% en poids d'un composant antimicrobien (K).

17. Procédé selon l'une quelconque des revendications 1 à 16, **caractérisé en ce qu'**on utilise une composition qui contient de 0,3 à 2,5% en poids du composant antimicrobien (K), de 70 à 99,5% en poids du solvant aqueux et de 0,1 à 30% en poids de composants auxiliaires.

18. Composition pour la finition des matériaux textiles ou des fibres, contenant de 0,01 à 20% en poids d'un composant d'apprêt (P), qui augmente le caractère hydrophobe de la surface des matériaux textiles ou des fibres, de 70 à 99,5% en poids du solvant aqueux et de 0,1 à 30% en poids de composants auxiliaires et de 0,01 à 10% en poids d'un composé organique d'ammonium quaternaire présentant la formule générale (I) 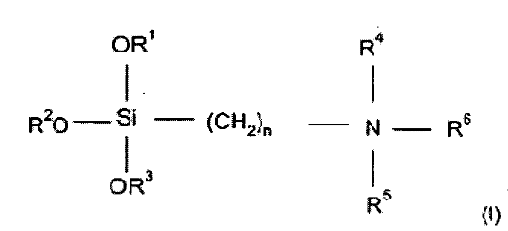 dans laquelle les substituants, indépendamment les uns des autres ont les significations suivantes:
- R¹ est un radical alkyle, ramifié ou non ramifié, comportant 1 à 12 atomes de carbone, dans lequel le radical alkyle peut également être substitué par un groupe H-[(CH₂₎ₘO)_{q} dans lequel m peut être un nombre entier de 0 à 4 et q est un nombre entier de 1 à 6;
- R² est un radical alkyle, ramifié ou non ramifié, comportant 1 à 12 atomes de carbone, dans lequel le radical alkyle peut également être substitué par un groupe H-[(CH₂₎ₘO)_{q} dans lequel m peut être un nombre entier de 0 à 4 et q est un nombre entier de 1 à 6;
- R³ est un radical alkyle, ramifié ou non ramifié, comportant 1 à 12 atomes de carbone, dans lequel le radical alkyle peut également être substitué par un groupe H-[(CH_{2) m}O)_{q} dans lequel m peut être un nombre entier de 0 à 4 et q est un nombre entier de 1 à 6;
- R⁴ est un radical alkyle, ramifié ou non ramifié, comportant 1 à 18 atomes de carbone, un radical cycloalkyle comportant 3 à 7 atomes de carbone, un radical phényle, un radical benzyle éventuellement substitué par un ou deux atomes d'halogène ou un groupe hétéroaryle;
- R⁵ est un radical alkyle, ramifié ou non ramifié, comportant 1 à 18 atomes de carbone, un radical cycloalkyle comportant 3 à 7 atomes de carbone, un radical phényle, un radical benzyle éventuellement substitué par un ou deux atomes d'halogène ou un groupe hétéroaryle;
- R⁶ est un radical alkyle, ramifié ou non ramifié, comportant 8 à 18 atomes de carbone;
- n est un nombre entier de 1 à 6,
et où
le composant d'apprêt organique (P) consiste en un ou plusieurs des composés suivants:
- les acides monocarboxyliques ou dicarboxyliques aromatiques, lesquels peuvent être substitués par des radicaux hydroxy,
- les monoamines et diamines aromatiques, les monoalcools ou dialcools aromatiques,
- mes monoalcools et dialcools aromatiques
- les acides monocarboxyliques ou dicarboxyliques aliphatiques comportant de 6 à 26 atomes de carbone, qui peuvent également être substitués par des groupes hydroxyles ou amino;
- des amines primaires, secondaires et tertiaires aliphatiques comportant de 6 à 26 atomes de carbone,
- des alcools primaires ou secondaires aliphatiques comportant de 6 à 26 atomes de carbone,
- des mercaptans primaires aliphatiques, comportant de 6 à 26 atomes de carbone;
- des acides aminés.

19. Composition selon la revendication 18, **caractérisé en ce qu'**elle comprend de 0,01 à 20% en poids d'un composant d'apprêt (P), de 70 à 95% en poids du solvant aqueux, 0,1 à 30% en poids de composants auxiliaires, 0,01 à 10% en poids d'un composé organique d'ammonium quaternaire de formule générale (I) ainsi que 0,01 à 20% en poids du composant consistant en un sel métallique (M).

20. Composition selon l'une quelconque des revendications 18 ou 19, **caractérisé en ce qu'**elle contient de 0,05 à 15% en poids d'un composant d'apprêt (P), lequel composant d'apprêt (P) consistant en un ou plusieurs des composés suivants:
- acides monocarboxyliques ou dicarboxyliques aromatiques, lesquels peuvent être substitués par des radicaux hydroxy,
- acides monocarboxyliques aliphatiques comportant de 6 à 26 atomes de carbone, alcools primaires ou secondaires comportant de 6 à 26 atomes de carbone
- alcools primaires comportant 6 à 26 atomes de carbone
- amines primaires comportant 6 à 26 atomes de carbone et
- acides aminés naturels.

21. Composition selon l'une quelconque des revendications 18 à 20, **caractérisé en ce que**, en plus du solvant aqueux, elle contient de 0,05 à 15% en poids d'un des composants d'apprêt(P) suivants:
- acides mono-et dicarboxyliques aromatiques, qui peuvent être substitués par des radicaux hydroxy,
- acides monocarboxyliques aliphatiques comportant de 6 à 26 atomes de carbone,
- alcools aliphatiques primaires contenant de 6 à 26 atomes de carbone,
- amines primaires comportant 6 à 26 atomes de carbone,
- acides aminés naturels
et contient en outre de 0,01 à 10% de sel d'ammonium de diméthyltétradecyl [3 (triméthoxysilyl)- propyl] ou de sel d'ammonium de diméthyloctadecyl [3-triméthoxysilyl)-propyl].

22. Utilisation d'une composition selon l'une quelconque des revendications 18 à 21, pour le traitement antimicrobien de matériaux textiles, de fibres et de fils composés essentiellement de matériaux synthétiques.

23. Utilisation selon la revendication 22 pour le finissage des matériaux textiles, des fibres et des fils qui se composent essentiellement de polyamide et/ou de polyester.

24. Utilisation selon l'une des revendications 22 ou 23 pour le traitement antimicrobien de matériaux textiles, de fibres et de fils par foulardage, application de mousse, pulvérisation, enduction ou extraction.

25. Textiles, fibres et fils qui ont reçu un traitement antimicrobien par un procédé selon l'une quelconque des revendications 1 à 17.
